(19) Europäisches Patentamt
European Patent Office
Office européen des brevets

(11) **EP 4 447 346 A1**

(12) **EUROPEAN PATENT APPLICATION**
published in accordance with Art. 153(4) EPC

(43) Date of publication:
**16.10.2024 Bulletin 2024/42**

(21) Application number: **22914379.7**

(22) Date of filing: **20.12.2022**

(51) International Patent Classification (IPC):
***H04L 1/00*** ***(2006.01)***

(52) Cooperative Patent Classification (CPC):
**H04B 7/0452; H04B 7/0456; H04B 7/06;**
**H04L 1/00; H04W 72/0453; H04W 72/12**

(86) International application number:
**PCT/CN2022/140220**

(87) International publication number:
**WO 2023/125125 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2021 CN 202111669034**

(71) Applicant: **Huawei Technologies Co., Ltd.**
**Shenzhen, Guangdong 518129 (CN)**

(72) Inventors:
• **XU, Jun**
**Shenzhen, Guangdong 518129 (CN)**
• **JIN, Huangping**
**Shenzhen, Guangdong 518129 (CN)**
• **WANG, Hanqing**
**Shenzhen, Guangdong 518129 (CN)**
• **WANG, Xiaohan**
**Shenzhen, Guangdong 518129 (CN)**
• **PANG, Jiyong**
**Shenzhen, Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **COMMUNICATION METHOD AND COMMUNICATION APPARATUS**

(57) This application provides a communication method and a communication apparatus, so that a network device can indicate different uplink precoding information of different RB sets to a terminal device, to avoid a performance loss to an extent, and improve communication efficiency. In the method, the terminal device receives first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2; the terminal device receives DCI; the terminal device determines the second indication information in the DCI based on the quantity of bits; and the terminal device sends uplink information based on the uplink precoding information of the P RB sets.

FIG. 4

**Description**

This application claims priority to Chinese Patent Application No. 202111669034.6, filed with the China National Intellectual Property Administration on December 30, 2021, and entitled "COMMUNICATION METHOD AND COMMUNICATION APPARATUS", which is incorporated herein by reference in its entirety.

**TECHNICAL FIELD**

This application relates to the field of wireless technologies, and in particular, to a communication method and a communication apparatus.

**BACKGROUND**

In an uplink multi-user multiple-input multiple-output (multi-user multiple-input multiple-output, MU-MIMO) system, uplink precoding is important in system capacity and spectral efficiency. After determining uplink precoding information of a terminal device, a network device needs to indicate the uplink precoding information to the corresponding terminal device.

Currently, an uplink bandwidth used by the terminal device includes a plurality of consecutive frequency domain resources corresponding to an uplink bandwidth part (bandwidth part, BWP). Correspondingly, the network device indicates same uplink precoding information to the plurality of consecutive frequency domain resources. To be specific, an uplink precoding information indicator sent by the network device indicates a specific type of uplink precoding information, so that the terminal device sends uplink information on the plurality of consecutive frequency domain resources based on the uplink precoding information.

However, different frequency domain resources correspond to different transmission channels. In the foregoing indication manner of the uplink precoding information, the terminal device uses the same uplink precoding information on the plurality of consecutive frequency domain resources. This easily causes a performance loss, and affects communication efficiency.

In addition, the network device may use a part of or all frequency domain resources in the uplink BWP as available uplink resources of the terminal device for scheduling. In other words, a scheduled bandwidth used by the terminal device may be unfixed. It is considered that a channel on each frequency domain resource is different. From a perspective of optimal performance, uplink precoding used on each frequency domain resource in the scheduled bandwidth used by the terminal device needs to be correspondingly designed based on a channel of the frequency domain resource. Therefore, optimal precoding on different frequency domain resources may be different. If the foregoing indication manner of the precoding information is directly extended to an application scenario in which the terminal device uses an unfixed scheduled bandwidth, because the scheduled bandwidth used by the terminal device may be unfixed, an information amount of uplink precoding information sent by the network device is unfixed. Consequently, the terminal device performs blind detection based on the received information, and energy consumption of the terminal device is high.

**SUMMARY**

This application provides a communication method and a communication apparatus, so that a network device can indicate different uplink precoding information of different resource block (resource block, RB) sets to a terminal device, to avoid a performance loss to an extent, and improve communication efficiency. In addition, after receiving downlink control information (downlink control information, DCI), the terminal device may determine second indication information in the DCI based on a quantity of bits indicated by first indication information, so that the terminal device can obtain an indicator of the uplink precoding information in the DCI without performing blind detection, to reduce energy consumption of the terminal device.

According to a first aspect of this application, a communication method is provided. The method is performed by a terminal device, or the method is performed by a part of components (for example, a processor, a chip, or a chip system) in a terminal device, or the method may be implemented by a logical module or software that can implement all or some functions of a terminal device. In the first aspect and possible implementations of the first aspect, an example in which the communication method is performed by a terminal device is used for description. In the method, the terminal device receives first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2; the terminal device receives DCI; the terminal device determines the second indication information in the DCI based on the quantity of bits; and the terminal device sends uplink information based on the uplink precoding information of the P RB sets.

Based on the foregoing technical solution, after the terminal device receives the first indication information indicating the quantity of bits occupied by the second indication information, the terminal device determines the second indication information in the DCI based on the quantity of bits. The first indication information indicates the quantity of bits occupied by the second indication information, the second indication information indicates the uplink precoding information of the P RB sets, P is greater than or equal to 2, and different RB sets in the P RB sets correspond to different uplink precoding information. In other words, a network device may indicate two or more types of uplink precoding information to the terminal device based on the second indication information in the DCI. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the first indication information received by the terminal device indicates the quantity of bits occupied by the second indication information. In other words, the terminal device may determine, based on the first indication information, the quantity of bits occupied by the second indication information indicating the uplink precoding information of the P RB sets. In this way, after receiving the DCI, the terminal device may determine the second indication information in the DCI based on the quantity of bits indicated by the first indication information, so that the terminal device can obtain an indicator of the uplink precoding information in the DCI without performing blind detection, to reduce energy consumption of the terminal device.

In a possible implementation of the first aspect, when there is an RB set including a plurality of RBs in the P RB sets, the plurality of RBs in the RB set have same uplink precoding information.

Based on the foregoing technical solution, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation of the first aspect, the uplink information is carried on some or all RBs in the P RB sets.

Based on the foregoing technical solution, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information, the terminal device receives, from the network device, indication information indicating an uplink resource scheduled for the terminal device, so that the terminal device can send the uplink information based on the uplink resource that is scheduled for the terminal device and that is indicated by the indication information.

In a possible implementation of the first aspect, RBs included in the P RB sets are uplink resources scheduled for the terminal device.

Based on the foregoing technical solution, the RBs included in the P RB sets indicated by the second indication information are RBs corresponding to the uplink resources scheduled for the terminal device. In other words, the uplink precoding indicator (namely, the second indication information) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

In a possible implementation of the first aspect, the method further includes: The terminal device receives third indication information, where the third indication information indicates that each RB set in the P RB sets includes one or more RBs in the uplink resources scheduled for the terminal device.

Based on the foregoing technical solution, when the RBs included in the P RB sets are the uplink resources scheduled for the terminal device, that is, when all the RBs in the P RB sets are located in the uplink resources scheduled for the terminal device, the third indication information indicates an association relationship between an RB in the P RB sets and an RB in the uplink resources scheduled for the terminal device. In this way, the terminal device can determine, based on the association relationship and the second indication information, the uplink precoding information corresponding to the uplink resources scheduled for the terminal device, and further send the uplink information on the uplink resources scheduled for the terminal device.

In a possible implementation of the first aspect, the third indication information includes a value of P or a quantity of RBs included in each RB set in the P RB sets.

Based on the foregoing technical solution, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the third indication information sent by the network device may include the value of P, so that the terminal device determines, based on the value of P, the RBs included in each RB set in the P RB sets. Alternatively, the third indication information sent by the network device may include the quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

In a possible implementation of the first aspect, RBs included in the P RB sets are frequency domain resources corresponding to an uplink bandwidth part (bandwidth part, BWP) of the terminal device.

Based on the foregoing technical solution, the RBs included in the P RB sets indicated by the second indication information are the frequency domain resources corresponding to the uplink BWP of the terminal device. In other words, the uplink precoding indicator (namely, the second indication information) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

In a possible implementation of the first aspect, the method further includes: The terminal device receives fourth indication information, where the fourth indication information indicates that each RB set in the P RB sets includes one or more RBs in the frequency domain resources corresponding to the uplink BWP of the terminal device.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, the fourth indication information indicates an association relationship between an RB in the P RB sets and an RB in the frequency domain resources corresponding to the uplink BWP. In this way, the terminal device can determine, based on the association relationship and the second indication information, the uplink precoding information corresponding to the uplink resources scheduled for the terminal device in the frequency domain resources corresponding to the uplink BWP, and further send the uplink information on the uplink resources scheduled for the terminal device.

In a possible implementation of the first aspect, the fourth indication information includes a value of P or a quantity of RBs included in each RB set.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the fourth indication information sent by the network device may include the value of P, so that the terminal device determines, based on the value of P, RBs included in each RB set in the P RB sets. Alternatively, the fourth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

In a possible implementation of the first aspect, the uplink precoding information of the P RB sets is determined based on a first codebook, and the first codebook is any one of the following:

a preconfigured codebook;
a codebook determined in at least two codebooks based on the value of P; or
a codebook corresponding to a discrete Fourier transform (discrete Fourier transform, DFT) oversampling matrix generated based on the value of P.

Based on the foregoing technical solution, the terminal device may determine the uplink precoding information of the P RB sets in the first codebook based on the second indication information. The first codebook may be determined in the foregoing plurality of manners, to improve flexibility of implementing the solution.

In a possible implementation of the first aspect, the uplink precoding information of the P RB sets is determined based on a first codebook. The method further includes: The terminal device receives fifth indication information, where the fifth indication information indicates that the first codebook is any one of the following:

> a preconfigured codebook;
> a codebook determined in at least two codebooks based on the value of P; or
> a codebook corresponding to a DFT oversampling matrix generated based on the value of P.

Based on the foregoing technical solution, the terminal device may further determine, based on the fifth indication information sent by the network device, that the first codebook used to determine the uplink precoding information of the P RB sets is determined in one of the plurality of implementations, and further determine the uplink precoding information of the P RB sets.

Optionally, when the first codebook is a preconfigured codebook, the terminal device may determine the uplink precoding information of the P RB sets in the preconfigured codebook based on the second indication information.

Optionally, when the first codebook is a codebook determined in at least two codebooks based on the value of P, the terminal device may determine a codebook in the at least two codebooks based on the value of P, and further determine the uplink precoding information of the P RB sets in the determined codebook based on the second indication information.

Optionally, when the first codebook is a codebook corresponding to a DFT oversampling matrix generated based on the value of P, after generating the DFT oversampling matrix based on the value of P, the terminal device may determine a codebook corresponding to the DFT oversampling matrix, and further determine, in the codebook corresponding to the DFT oversampling matrix, the uplink precoding information of the P RB sets based on the second indication information.

In a possible implementation of the first aspect, when there is an RB set including a plurality of RBs in the P RB sets, RB indexes of the plurality of RBs are consecutive.

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order.

Optionally, when the RBs included in the P RB sets are the frequency domain resources corresponding to the uplink BWP, that is, when all the RBs in the P RB sets are located in the frequency domain resources corresponding to the uplink BWP, RB indexes of RBs included in any RB set in the P RB sets are consecutive in the frequency domain resources corresponding to the uplink BWP. In other words, in this implementation, when there is an RB set including a plurality of RBs in the P RB sets, RB indexes of the plurality of RBs in the uplink BWP are consecutive.

In a possible implementation of the first aspect, each RB set in the P RB sets includes a same quantity of RBs.

Optionally, at least two RB sets in the P RB sets include different quantities of RBs.

In a possible implementation of the first aspect, the second indication information includes P pieces of information, the P pieces of information respectively indicate the uplink precoding information of the P RB sets, and different information in the P pieces of information occupies a same quantity of bits in the DCI.

Based on the foregoing technical solution, after the terminal device determines the second indication information in the DCI based on the first indication information, the terminal device may equally divide the bits occupied by the second indication information into P pieces of information for interpretation, to determine the P pieces of information included in the second indication information, and determine, based on some or all of the P pieces of information, the uplink precoding information corresponding to the uplink resources carrying the uplink information.

Optionally, when different information in the P pieces of information occupies a same quantity of bits in the DCI, that is, when different information in the P pieces of information indicates a same total quantity of indexes of uplink precoding information, uplink precoding information of different RB sets in the P RB sets may be determined by using a same codebook. Therefore, the terminal device can determine uplink precoding information of different RB sets in the P RB sets in a same codebook based on the second indication information. This is easy to implement.

In a possible implementation of the first aspect, the second indication information includes P pieces of information, the P pieces of information respectively indicate the uplink precoding information of the P RB sets, and at least two pieces of information in the P pieces of information occupy different quantities of bits in the DCI.

Based on the foregoing technical solution, after the terminal device determines the second indication information in the DCI based on the first indication information, the terminal device may divide, based on quantities of bits occupied by different information in the P pieces of information, the bits occupied by the second indication information into P pieces of information for interpretation, to determine the P pieces of information included in the second indication information, and determine, based on some or all of the P pieces of information, the uplink precoding information corresponding to the uplink resources carrying the uplink information.

Optionally, when at least two pieces of information in the P pieces of information occupy different quantities of bits in the DCI, that is, when different information in the P pieces of information may indicate different total quantities of indexes of uplink precoding information, uplink precoding information of at least two RB sets corresponding to the at least two pieces of information may be determined by using different codebooks. Therefore, the terminal device can determine uplink precoding information of different RB sets in the P RB sets in at least two different codebooks based on the second indication information, so that the network device flexibly selects different codebooks to indicate the uplink precoding information of the P RB sets.

In addition, when at least two pieces of information in the P pieces of information occupy different quantities of bits in the DCI, the network device can indicate the uplink precoding information without selecting a same codebook. Therefore, when the network device has configured, by using the first indication information, the quantity of bits occupied by the second indication information, that is, when the quantity of bits occupied by the second indication information remains unchanged, if the network device selects a codebook with a small quantity of indexes of uplink precoding information, uplink precoding information of an RB set may be indicated by using a small quantity of bits. Correspondingly, if the network device selects a codebook with a large quantity of indexes of uplink precoding information, uplink precoding information corresponding to a large quantity of indexes of uplink precoding information may be indicated by using a large quantity of bits.

According to a second aspect of this application, a communication method is provided. The method is performed by a network device, or the method is performed by a part of component (for example, a processor, a chip, or a chip system) in a network device, or the method may be implemented by a logical module or software that can implement all or some functions of a network device. In the second aspect and possible implementations of the second aspect, an example in which the communication method is performed by a network device is used for description. In the method, the network device determines first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2; the network device sends the first indication information; the network device sends DCI, where the DCI includes the second indication information; and the network device receives uplink information based on the uplink precoding information of the P RB sets.

Based on the foregoing technical solution, after the network device sends the first indication information indicating the quantity of bits occupied by the second indication information and the DCI, a terminal device may determine the second indication information in the DCI based on the quantity of bits. The first indication information indicates the quantity of bits occupied by the second indication information, the second indication information indicates the uplink precoding information of the P RB sets, P is greater than or equal to 2, and different RB sets in the P RB sets correspond to different uplink precoding information. In other words, the network device may indicate two or more types of uplink precoding information to the terminal device based on the second indication information in the DCI. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the first indication information sent by the network device indicates the quantity of bits occupied by the second indication information. In other words, the terminal device may determine, based on the first indication information, the quantity of bits occupied by the second indication information indicating the uplink precoding information of the P RB sets. In this way, after receiving the DCI, the terminal device may determine the second indication information in the DCI based on the quantity of bits indicated by the first indication information, so that the terminal device can obtain an indicator of the uplink precoding information in the DCI without performing blind detection, to reduce energy consumption of the terminal device.

It should be understood that, that the network device receives uplink information based on the uplink precoding information of the P RB sets includes: The network device receives the uplink information, where the uplink information is information obtained by performing precoding processing on a to-be-sent signal based on the uplink precoding information of the P RB sets.

In a possible implementation of the second aspect, when there is an RB set including a plurality of RBs in the P RB sets, the plurality of RBs in the RB set have same uplink precoding information.

Based on the foregoing technical solution, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation of the second aspect, the uplink information is carried on some or all RBs in the P RB sets.

Based on the foregoing technical solution, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information, the network device sends, to the terminal device, indication information indicating an uplink resource scheduled for the terminal device, so that the terminal device can send the uplink information based on the uplink resource that is scheduled for the terminal device and that is indicated by the indication information.

In a possible implementation of the second aspect, RBs included in the P RB sets are uplink resources scheduled for the terminal device.

Based on the foregoing technical solution, the RBs included in the P RB sets indicated by the second indication information are RBs corresponding to the uplink resources scheduled for the terminal device. In other words, the uplink precoding indicator (namely, the second indication information) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

In a possible implementation of the second aspect, the method further includes: The network device sends third indication information, where the third indication information indicates that each RB set in the P RB sets includes one or more RBs in the uplink resources scheduled for the terminal device.

Based on the foregoing technical solution, when the RBs included in the P RB sets are the uplink resources scheduled for the terminal device, that is, when all the RBs in the P RB sets are located in the uplink resources scheduled for the terminal device, the third indication information indicates an association relationship between an RB in the P RB sets and an RB in the uplink resources scheduled for the terminal device. In this way, the terminal device can determine, based on the association relationship and the second indication information, the uplink precoding information corresponding to the uplink resources scheduled for the terminal device, and further send the uplink information on the uplink resources scheduled for the terminal device.

In a possible implementation of the second aspect, the third indication information includes a value of P or a quantity of RBs included in each RB set.

Based on the foregoing technical solution, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the third indication information sent by the network device may include the value of P, so that the terminal device determines, based on the value of P, the RBs included in each RB set in the P RB sets. Alternatively, the third indication information sent by the network device may include the quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

In a possible implementation of the second aspect, RBs included in the P RB sets are frequency domain resources corresponding to an uplink BWP of the terminal device.

Based on the foregoing technical solution, the RBs included in the P RB sets indicated by the second indication information are the frequency domain resources corresponding to the uplink BWP of the terminal device. In other words, the uplink precoding indicator (namely, the second indication information) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

In a possible implementation of the second aspect, the method further includes: The network device sends fourth indication information, where the fourth indication information indicates that each RB set in the P RB sets includes one or more RBs in the frequency domain resources corresponding to the uplink BWP of the terminal device.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, the third indication information indicates an association relationship between an RB in the P RB sets and an RB in the frequency domain resources corresponding to the uplink BWP. In this way, the terminal device can determine, based on the association relationship and the second indication information, the uplink precoding information corresponding to the uplink resources scheduled for the terminal device in the frequency domain resources corresponding to the uplink BWP, and further send the uplink information on the uplink resources scheduled for the terminal device.

In a possible implementation of the second aspect, the fourth indication information includes a value of P or a quantity of RBs included in each RB set.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the fourth indication information sent by the network device may include the value of P, so that the terminal device determines, based on the value of P, RBs included in each RB set in the P RB sets. Alternatively, the fourth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

In a possible implementation of the second aspect, the uplink precoding information of the P RB sets is determined based on a first codebook.

The method further includes:

the network device sends fifth indication information, where the fifth indication information indicates that the first codebook is any one of the following:

  a preconfigured codebook;
  a codebook determined in at least two codebooks based on the value of P; or
  a codebook corresponding to a DFT oversampling matrix generated based on the value of P.

Based on the foregoing technical solution, after the network device sends the fifth indication information, the terminal device may further determine, based on the fifth indication information sent by the network device, that the first codebook used to determine the uplink precoding information of the P RB sets is determined in one of the plurality of implementations, and further determine the uplink precoding information of the P RB sets.

Optionally, when the first codebook is a preconfigured codebook, the terminal device may determine the uplink precoding information of the P RB sets in the preconfigured codebook based on the second indication information.

Optionally, when the first codebook is a codebook determined in at least two codebooks based on the value of P, the terminal device may determine a codebook in the at least two codebooks based on the value of P, and further determine the uplink precoding information of the P RB sets in the determined codebook based on the second indication information.

Optionally, when the first codebook is a codebook corresponding to a DFT oversampling matrix generated based on the value of P, after generating the DFT oversampling matrix based on the value of P, the terminal device may determine a codebook corresponding to the DFT oversampling matrix, and further determine, in the codebook corresponding to the DFT oversampling matrix, the uplink precoding information of the P RB sets based on the second indication information.

In a possible implementation of the second aspect, when there is an RB set including a plurality of RBs in the P RB sets, RB indexes of the plurality of RBs are consecutive.

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order.

Optionally, when the RBs included in the P RB sets are the frequency domain resources corresponding to the uplink BWP, that is, when all the RBs in the P RB sets are located in the frequency domain resources corresponding to the uplink BWP, RB indexes of RBs included in any RB set in the P RB sets are consecutive in the frequency domain resources corresponding to the uplink BWP. In other words, in this implementation, when there is an RB set including a plurality of RBs in the P RB sets, RB indexes of the plurality of RBs in the uplink BWP are consecutive.

In a possible implementation of the second aspect, each RB set in the P RB sets includes a same quantity of RBs.

Optionally, at least two RB sets in the P RB sets include different quantities of RBs.

In a possible implementation of the second aspect, the second indication information includes P pieces of information, the P pieces of information respectively indicate the uplink precoding information of the P RB sets, and different information in the P pieces of information occupies a same quantity of bits in the DCI.

Based on the foregoing technical solution, after the terminal device determines the second indication information in the DCI based on the first indication information, the terminal device may equally divide the bits occupied by the second indication information into P pieces of information for interpretation, to determine the P pieces of information included in the second indication information, and determine, based on some or all of the P pieces of information, the uplink precoding information corresponding to the uplink resources carrying the uplink information.

Optionally, when different information in the P pieces of information occupies a same quantity of bits in the DCI, that is, when different information in the P pieces of information indicates a same total quantity of indexes of uplink precoding information, uplink precoding information of different RB sets in the P RB sets may be determined by using a same codebook. Therefore, the terminal device can determine uplink precoding information of different RB sets in the P RB sets in a same codebook based on the second indication information. This is easy to implement.

In a possible implementation of the second aspect, the second indication information includes P pieces of information, the P pieces of information respectively indicate the uplink precoding information of the P RB sets, and at least two pieces of information in the P pieces of information occupy different quantities of bits in the DCI.

Based on the foregoing technical solution, after the terminal device determines the second indication information in the DCI based on the first indication information, the terminal device may divide, based on quantities of bits occupied by different information in the P pieces of information, the bits occupied by the second indication information into P pieces of information for interpretation, to determine the P pieces of information included in the second indication information, and determine, based on some or all of the P pieces of information, the uplink precoding information corresponding to the uplink resources carrying the uplink information.

Optionally, when at least two pieces of information in the P pieces of information occupy different quantities of bits in the DCI, that is, when different information in the P pieces of information may indicate different total quantities of indexes of uplink precoding information, uplink precoding information of at least two RB sets corresponding to the at least two pieces of information may be determined by using different codebooks. Therefore, the terminal device can determine uplink precoding information of different RB sets in the P RB sets in at least two different codebooks based on the second indication information, so that the network device flexibly selects different codebooks to indicate the uplink precoding information of the P RB sets.

In addition, when at least two pieces of information in the P pieces of information occupy different quantities of bits in the DCI, the network device can indicate the uplink precoding information without selecting a same codebook. Therefore, when the network device has configured, by using the first indication information, the quantity of bits occupied by the second indication information, that is, when the quantity of bits occupied by the second indication information remains unchanged, if the network device selects a codebook with a small quantity of indexes of uplink precoding information, uplink precoding information of an RB set may be indicated by using a small quantity of bits. Correspondingly, if the network device selects a codebook with a large quantity of indexes of uplink precoding information, uplink precoding information corresponding to a large quantity of indexes of uplink precoding information may be indicated by using a large quantity of bits.

According to a third aspect of this application, a communication method is provided. The method is performed by a terminal device, or the method is performed by a part of component (for example, a processor, a chip, or a chip system) in a terminal device, or the method may be implemented by a logical module or software that can implement all or some functions of a terminal device. In the first aspect and possible implementations of the first aspect, an example in which the communication method is performed by a terminal device is used for description. In the method, the terminal device receives sixth indication information, where the sixth indication information indicates a resource element (resource element, RE) occupied by a beamformed channel state information-reference signal (channel state information-reference signal, CSI-RS); the terminal device receives the CSI-RS based on the sixth indication information; the terminal device performs channel measurement based on the CSI-RS, to obtain uplink precoding information of P RB sets, where each RB set in the P RB sets includes one or more RBs, different RB sets in the P RB sets correspond to different uplink precoding information, and P is greater than or equal to 2; and the terminal device sends uplink information based on the uplink precoding information of the P RB sets.

Based on the foregoing technical solution, after the terminal device receives the sixth indication information indicating the RE occupied by the beamformed CSI-RS, the terminal device receives the CSI-RS based on the sixth indication information. Then, the terminal device performs channel measurement based on the CSI-RS, to obtain the uplink precoding information of the P RB sets. P is greater than or equal to 2, and different RB sets in the P RB sets correspond to different uplink precoding information. In other words, a network device may indicate two or more types of uplink precoding information to the terminal device based on the CSI-RS, to implement high-precision uplink precoding indication. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the sixth indication information received by the terminal device indicates the RE occupied by the beamformed CSI-RS. In other words, the terminal device may determine, based on the sixth indication information, the RE occupied by the CSI-RS indicating the uplink precoding information of the P RB sets. In this way, the terminal device receives the CSI-RS based on the sixth indication information, to prevent the terminal device from obtaining incorrect uplink precoding information.

It should be understood that, that the sixth indication information indicates the RE occupied by the beamformed CSI-RS includes: The sixth indication information indicates a quantity of REs occupied by the beamformed CSI-RS, and/or the sixth indication information indicates a location of the RE occupied by the beamformed CSI-RS.

In a possible implementation of the third aspect, when there is an RB set including a plurality of RBs in the P RB sets, the plurality of RBs in the RB set have same uplink precoding information.

Based on the foregoing technical solution, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation of the third aspect, the uplink information is carried on some or all RBs in the P RB sets.

Based on the foregoing technical solution, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information, the terminal device receives, from the network device, indication information indicating an uplink resource scheduled for the terminal device, so that the terminal device can send the uplink information based on the uplink resource that is scheduled for the terminal device and that is indicated by the indication information.

In a possible implementation of the third aspect, RBs included in the P RB sets are uplink resources scheduled for the terminal device.

Based on the foregoing technical solution, the RBs included in the P RB sets are RBs corresponding to the uplink resources scheduled for the terminal device. In other words, the uplink precoding indicator (namely, information carried in the CSI-RS) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

In a possible implementation of the third aspect, the method further includes: The terminal device receives seventh indication information, where the seventh indication information indicates that each RB set in the P RB sets includes one or more RBs in the uplink resources scheduled for the terminal device.

Based on the foregoing technical solution, when the RBs included in the P RB sets are the uplink resources scheduled for the terminal device, that is, when all the RBs in the P RB sets are located in the uplink resources scheduled for the terminal device, the seventh indication information indicates an association relationship between an RB in the P RB sets and an RB in the uplink resources scheduled for the terminal device. In this way, the terminal device can determine, based on the association relationship and the uplink precoding information of the P RB sets, the uplink precoding information corresponding to the uplink resources scheduled for the terminal device, and further send the uplink information on the uplink resources scheduled for the terminal device.

In a possible implementation of the third aspect, the seventh indication information includes a value of P or a quantity of RBs included in each RB set.

Based on the foregoing technical solution, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the seventh indication information sent by the network device may include the value of P, so that the terminal device determines, based on the value of P, RBs included in each RB set in the P RB sets. Alternatively, the seventh indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

In a possible implementation of the third aspect, RBs included in the P RB sets are frequency domain resources corresponding to an uplink BWP of the terminal device.

Based on the foregoing technical solution, the RBs included in the P RB sets are the frequency domain resources corresponding to the uplink BWP of the terminal device. In other words, the uplink precoding indicator (namely, information carried in the CSI-RS) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

In a possible implementation of the third aspect, the method further includes: The terminal device receives eighth indication information, where the eighth indication information indicates that each RB set in the P RB sets includes one or more RBs in the frequency domain resources corresponding to the uplink BWP of the terminal device.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, the eighth indication information indicates an association relationship between an RB in the P RB sets and an RB in the frequency domain resources corresponding to the uplink BWP. In this way, the terminal device can determine, based on the association relationship and the uplink precoding information of the P RB sets, the uplink precoding information corresponding to the uplink resources scheduled for the terminal device in the frequency domain resources corresponding to the uplink BWP, and further send the uplink information on the uplink resources scheduled for the terminal device.

In a possible implementation of the third aspect, the eighth indication information includes a value of P or a quantity of RBs included in each RB set.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the eighth indication information sent by the network device may include the value of P, so that the terminal device determines, based on the value of P, RBs included in each RB set in the P RB sets. Alternatively, the eighth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

In a possible implementation of the third aspect, when there is an RB set including a plurality of RBs in the P RB sets, RB indexes of the plurality of RBs are consecutive.

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order.

Optionally, when the RBs included in the P RB sets are the frequency domain resources corresponding to the uplink BWP, that is, when all the RBs in the P RB sets are located in the frequency domain resources corresponding to the uplink BWP, RB indexes of RBs included in any RB set in the P RB sets are consecutive in the frequency domain resources corresponding to the uplink BWP. In other words, in this implementation, when there is an RB set including a plurality of RBs in the P RB sets, RB indexes of the plurality of RBs in the uplink BWP are consecutive.

In a possible implementation of the third aspect, each RB set in the P RB sets includes a same quantity of RBs.

Optionally, at least two RB sets in the P RB sets include different quantities of RBs.

In a possible implementation of the third aspect, resource elements REs occupied by the beamformed CSI-RS include P groups of REs, the P groups of REs are respectively used to determine the uplink precoding information of the P RB sets, and different groups in the P groups of REs occupy a same quantity of REs.

Based on the foregoing technical solution, after the terminal device receives the CSI-RS based on the sixth indication information, the terminal device may equally divide the REs occupied by the CSI-RS into the P groups of REs, and determine, based on information carried by some REs or information carried by all REs in the P groups of REs, the uplink precoding information corresponding to the uplink resource carrying the uplink information.

In a possible implementation of the third aspect, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

Based on the foregoing technical solution, after the terminal device receives the CSI-RS based on the sixth indication information, the terminal device may divide, based on quantities of REs in different groups in the P groups of REs, the REs occupied by the CSI-RS into the P groups of REs, and determine, based on information carried by some REs or information carried by all REs in the P groups of REs, the uplink precoding information corresponding to the uplink resource carrying the uplink information.

According to a fourth aspect of this application, a communication method is provided. The method is performed by a network device, or the method is performed by a part of component (for example, a processor, a chip, or a chip system) in a network device, or the method may be implemented by a logical module or software that can implement all or some functions of a network device. In the second aspect and possible implementations of the second aspect, an example in which the communication method is performed by a network device is used for description. In the method, the network device sends sixth indication information, where the sixth indication information indicates a resource element RE occupied by a beamformed CSI-RS; the network device sends the CSI-RS, where the CSI-RS is used to perform channel measurement to obtain uplink precoding information of P RB sets, each RB set in the P RB sets includes one or more RBs, different RB sets in the P RB sets correspond to different uplink precoding information, and P is greater than or equal to 2; and the network device receives uplink information based on the uplink precoding information of the P RB sets.

Based on the foregoing technical solution, after the network device sends the sixth indication information indicating the RE occupied by the beamformed CSI-RS and the CSI-RS, a terminal device receives the sixth indication information, and receives the CSI-RS based on the sixth indication information. Then, the terminal device performs channel measurement based on the CSI-RS, to obtain the uplink precoding information of the P RB sets. P is greater than or equal to 2, and different RB sets in the P RB sets correspond to different uplink precoding information. In other words, the network device may indicate two or more types of uplink precoding information to the terminal device based on the CSI-RS, to implement high-precision uplink precoding indication. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the sixth indication information received by the terminal device indicates the RE occupied by the beamformed CSI-RS. In other words, the terminal device may determine, based on the sixth indication information, the RE occupied by the CSI-RS indicating the uplink precoding information of the P RB sets. In this way, the terminal device receives the CSI-RS based on the sixth indication information, to prevent the terminal device from obtaining incorrect uplink precoding information.

It should be understood that, that the sixth indication information indicates the RE occupied by the beamformed CSI-RS includes: The sixth indication information indicates a quantity of REs occupied by the beamformed CSI-RS, and/or the sixth indication information indicates a location of the RE occupied by the beamformed CSI-RS.

It should be understood that, that the network device receives uplink information based on the uplink precoding information of the P RB sets includes: The network device receives the uplink information, where the uplink information is information obtained by performing precoding processing on a to-be-sent signal based on the uplink precoding information of the P RB sets.

In a possible implementation of the fourth aspect, when there is an RB set including a plurality of RBs in the P RB sets, the plurality of RBs in the RB set have same uplink precoding information.

Based on the foregoing technical solution, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation of the fourth aspect, the uplink information is carried on some or all RBs in the P RB sets.

Based on the foregoing technical solution, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information, the network device sends, to the terminal device, indication information indicating an uplink resource scheduled for the terminal device, so that the terminal device can send the uplink information based on the uplink resource that is scheduled for the terminal device and that is indicated by the indication information.

In a possible implementation of the fourth aspect, RBs included in the P RB sets are uplink resources scheduled for the terminal device.

Based on the foregoing technical solution, the RBs included in the P RB sets are RBs corresponding to the uplink resources scheduled for the terminal device. In other words, the uplink precoding indicator (namely, information carried in the CSI-RS) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

In a possible implementation of the fourth aspect, the method further includes: The network device sends seventh indication information, where the seventh indication information indicates that each RB set in the P RB sets includes one or more RBs in the uplink resources scheduled for the terminal device.

Based on the foregoing technical solution, when the RBs included in the P RB sets are the uplink resources scheduled for the terminal device, that is, when all the RBs in the P RB sets are located in the uplink resources scheduled for the terminal device, the seventh indication information indicates an association relationship between an RB in the P RB sets and an RB in the uplink resources scheduled for the terminal device. In this way, the terminal device can determine, based on the association relationship and the uplink precoding information of the P RB sets, the uplink precoding information corresponding to the uplink resources scheduled for the terminal device, and further send the uplink information on the uplink resources scheduled for the terminal device.

In a possible implementation of the fourth aspect, the seventh indication information includes a value of P or a quantity of RBs included in each RB set.

Based on the foregoing technical solution, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the seventh indication information sent by the network device may include the value of P, so that the terminal device determines, based on the value of P, RBs included in each RB set in the P RB sets. Alternatively, the seventh indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

In a possible implementation of the fourth aspect, RBs included in the P RB sets are frequency domain resources corresponding to an uplink BWP of the terminal device.

Based on the foregoing technical solution, the RBs included in the P RB sets are the frequency domain resources corresponding to the uplink BWP of the terminal device. In other words, the uplink precoding indicator (namely, information carried in the CSI-RS) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

In a possible implementation of the fourth aspect, the method further includes: The network device sends eighth indication information, where the eighth indication information indicates that each RB set in the P RB sets includes one or more RBs in the frequency domain resources corresponding to the uplink BWP of the terminal device.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, the eighth indication information indicates an association relationship between an RB in the P RB sets and an RB in the frequency domain resources corresponding to the uplink BWP. In this way, the terminal device can determine, based on the association relationship and the uplink precoding information of the P RB sets, the uplink precoding information corresponding to the uplink resources scheduled for the terminal device in the frequency domain resources corresponding to the uplink BWP, and further send the uplink information on the uplink resources scheduled for the terminal device.

In a possible implementation of the fourth aspect, the eighth indication information includes a value of P or a quantity of RBs included in each RB set.

Based on the foregoing technical solution, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the eighth indication information sent by the network device may include the value of P, so that the terminal device determines, based on the value of P, RBs included in each RB set in the P RB sets. Alternatively, the eighth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

In a possible implementation of the fourth aspect, when there is an RB set including a plurality of RBs in the P RB sets, RB indexes of the plurality of RBs are consecutive.

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order.

Optionally, when the RBs included in the P RB sets are the frequency domain resources corresponding to the uplink BWP, that is, when all the RBs in the P RB sets are located in the frequency domain resources corresponding to the uplink BWP, RB indexes of RBs included in any RB set in the P RB sets are consecutive in the frequency domain resources corresponding to the uplink BWP. In other words, in this implementation, when there is an RB set including a plurality of RBs in the P RB sets, RB indexes of the plurality of RBs in the uplink BWP are consecutive.

In a possible implementation of the fourth aspect, each RB set in the P RB sets includes a same quantity of RBs.

Optionally, at least two RB sets in the P RB sets include different quantities of RBs.

In a possible implementation of the fourth aspect, resource elements REs occupied by the beamformed CSI-RS include P groups of REs, the P groups of REs are respectively used to determine the uplink precoding information of the P RB sets, and different groups in the P groups of REs occupy a same quantity of REs.

Based on the foregoing technical solution, after the terminal device receives the CSI-RS based on the sixth indication information, the terminal device may equally divide the REs occupied by the CSI-RS into the P groups of REs, and determine, based on information carried by some REs or information carried by all REs in the P groups of REs, the uplink precoding information corresponding to the uplink resource carrying the uplink information.

In a possible implementation of the fourth aspect, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

Based on the foregoing technical solution, after the terminal device receives the CSI-RS based on the sixth indication information, the terminal device may divide, based on quantities of REs in different groups in the P groups of REs, the REs occupied by the CSI-RS into the P groups of REs, and determine, based on information carried by some REs or information carried by all REs in the P groups of REs, the uplink precoding information corresponding to the uplink resource carrying the uplink information.

According to a fifth aspect of this application, a communication apparatus is provided. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The apparatus includes a transceiver unit and a processing unit.

The transceiver unit is configured to receive first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2.

The transceiver unit is further configured to receive DCI.

The processing unit is configured to determine the second indication information in the DCI based on the quantity of bits.

The transceiver unit is further configured to send uplink information based on the uplink precoding information of the P RB sets.

In a possible implementation of the fifth aspect, when there is an RB set including a plurality of RBs in the P RB sets, the plurality of RBs in the RB set have same uplink precoding information.

In a possible implementation of the fifth aspect, the uplink information is carried on some or all RBs in the P RB sets.

In a possible implementation of the fifth aspect, RBs included in the P RB sets are uplink resources scheduled for the terminal device.

In a possible implementation of the fifth aspect,
the transceiver unit is further configured to receive third indication information, where the third indication information indicates that each RB set in the P RB sets includes one or more RBs in the uplink resources scheduled for the terminal device.

In a possible implementation of the fifth aspect,
the third indication information includes a value of P or a quantity of RBs included in each RB set.

In a possible implementation of the fifth aspect, RBs included in the P RB sets are frequency domain resources corresponding to an uplink BWP of the terminal device.

In a possible implementation of the fifth aspect,
the transceiver unit is further configured to receive fourth indication information, where the fourth indication information indicates that each RB set in the P RB sets includes one or more RBs in the frequency domain resources corresponding to the uplink BWP of the terminal device.

In a possible implementation of the fifth aspect,
the fourth indication information includes a value of P or a quantity of RBs included in each RB set.

In a possible implementation of the fifth aspect, the uplink precoding information of the P RB sets is determined based on a first codebook, and the first codebook is any one of the following:

  a preconfigured codebook;
  a codebook determined in at least two codebooks based on the value of P; or
  a codebook corresponding to a DFT oversampling matrix generated based on the value of P.

In a possible implementation of the fifth aspect, the uplink precoding information of the P RB sets is determined based on a first codebook.

The transceiver unit is further configured to receive fifth indication information, where the fifth indication information indicates that the first codebook is any one of the following:

  a preconfigured codebook;
  a codebook determined in at least two codebooks based on the value of P; or
  a codebook corresponding to a DFT oversampling matrix generated based on the value of P.

In a possible implementation of the fifth aspect, when there is an RB set including a plurality of RBs in the P RB sets, RB indexes of the plurality of RBs are consecutive.

In a possible implementation of the fifth aspect, each RB set in the P RB sets includes a same quantity of RBs.

In a possible implementation of the fifth aspect,
the second indication information includes P pieces of information, the P pieces of information respectively indicate the uplink precoding information of the P RB sets, and different information in the P pieces of information occupies a same quantity of bits in the DCI.

Alternatively, the second indication information includes P pieces of information, the P pieces of information respectively indicate the uplink precoding information of the P RB sets, and at least two pieces of information in the P pieces of information occupy different quantities of bits in the DCI.

In the fifth aspect of embodiments of this application, composition modules of the communication apparatus may be further configured to perform the steps performed in the possible implementations of the first aspect, and implement corresponding technical effects. For details, refer to the first aspect. Details are not described herein again.

According to a sixth aspect of this application, a communication apparatus is provided. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The apparatus includes a transceiver unit and a processing unit.

The processing unit is configured to determine first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2.

The transceiver unit is configured to send the first indication information.

The transceiver unit is further configured to send DCI, where the DCI includes the second indication information.

The transceiver unit is further configured to receive uplink information based on the uplink precoding information of the P RB sets.

In a possible implementation of the sixth aspect, RBs included in the P RB sets are uplink resources scheduled for a terminal device.

In a possible implementation of the sixth aspect,
the processing unit is further configured to determine third indication information, where the third indication information indicates that each RB set in the P RB sets includes one or more RBs in the uplink resources scheduled for the terminal device.

The transceiver unit is further configured to send the third indication information.

In a possible implementation of the sixth aspect,
the third indication information includes a value of P or a quantity of RBs included in each RB set.

In a possible implementation of the sixth aspect, RBs included in the P RB sets are frequency domain resources corresponding to an uplink BWP of the terminal device.

In a possible implementation of the sixth aspect,
the processing unit is further configured to determine fourth indication information, where the fourth indication information indicates that each RB set in the P RB sets includes one or more RBs in the frequency domain resources corresponding to the uplink BWP of the terminal device.

The transceiver unit is further configured to send the fourth indication information.

In a possible implementation of the sixth aspect,
the fourth indication information includes a value of P or a quantity of RBs included in each RB set.

In a possible implementation of the sixth aspect, the uplink precoding information of the P RB sets is determined based on a first codebook.

The processing unit is further configured to determine fifth indication information, where the fifth indication information indicates that the first codebook is any one of the following:

a preconfigured codebook;
a codebook determined in at least two codebooks based on the value of P; or
a codebook corresponding to a DFT oversampling matrix generated based on the value of P.

The transceiver unit is further configured to send the fifth indication information.

In a possible implementation of the sixth aspect, when there is an RB set including a plurality of RBs in the P RB sets, RB indexes of the plurality of RBs are consecutive.

In a possible implementation of the sixth aspect, each RB set in the P RB sets includes a same quantity of RBs.

In a possible implementation of the sixth aspect,
the second indication information includes P pieces of information, the P pieces of information respectively indicate the uplink precoding information of the P RB sets, and different information in the P pieces of information occupies a same quantity of bits in the DCI.

Alternatively, the second indication information includes P pieces of information, the P pieces of information respectively indicate the uplink precoding information of the P RB sets, and at least two pieces of information in the P pieces of information occupy different quantities of bits in the DCI.

In the sixth aspect of embodiments of this application, composition modules of the communication apparatus may be further configured to perform the steps performed in the possible implementations of the second aspect, and implement corresponding technical effects. For details, refer to the second aspect. Details are not described herein again.

According to a seventh aspect of this application, a communication apparatus is provided. The apparatus may implement the method in any one of the third aspect or the possible implementations of the third aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The apparatus includes a processing unit and a transceiver unit.

The transceiver unit is configured to receive sixth indication information, where the sixth indication information indicates a resource element RE occupied by a beamformed CSI-RS.

The transceiver unit is further configured to receive the CSI-RS based on the sixth indication information.

The processing unit is configured to perform channel measurement based on the CSI-RS, to obtain uplink precoding information of P RB sets, where each RB set in the P RB sets includes one or more RBs, different RB sets in the P RB sets correspond to different uplink precoding information, and P is greater than or equal to 2.

The transceiver unit is further configured to send uplink information based on the uplink precoding information of the P RB sets.

In a possible implementation of the seventh aspect, when there is an RB set including a plurality of RBs in the P RB sets, the plurality of RBs in the RB set have same uplink precoding information.

In a possible implementation of the seventh aspect, the uplink information is carried on some or all RBs in the P RB sets.

In a possible implementation of the seventh aspect, RBs included in the P RB sets are uplink resources scheduled for the terminal device.

In a possible implementation of the seventh aspect, the transceiver unit is further configured to receive seventh indication information, where the seventh indication information indicates that each RB set in the P RB sets includes one or more RBs in the uplink resources scheduled for the terminal device.

In a possible implementation of the seventh aspect, the seventh indication information includes a value of P or a quantity of RBs included in each RB set.

In a possible implementation of the seventh aspect, RBs included in the P RB sets are frequency domain resources corresponding to an uplink BWP of the terminal device.

In a possible implementation of the seventh aspect, the transceiver unit is further configured to receive eighth indication information, where the eighth indication information indicates that each RB set in the P RB sets includes one or more RBs in the frequency domain resources corresponding to the uplink BWP of the terminal device.

In a possible implementation of the seventh aspect, the eighth indication information includes a value of P or a quantity of RBs included in each RB set.

In a possible implementation of the seventh aspect, when there is an RB set including a plurality of RBs in the P RB sets, RB indexes of the plurality of RBs are consecutive.

In a possible implementation of the seventh aspect, each RB set in the P RB sets includes a same quantity of RBs.

In a possible implementation of the seventh aspect, resource elements REs occupied by the beamformed CSI-RS include P groups of REs, the P groups of REs are respectively used to determine the uplink precoding information of the P RB sets, and different groups in the P groups of REs occupy a same quantity of REs.

Alternatively, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

In the seventh aspect of embodiments of this application, composition modules of the communication apparatus may be further configured to perform the steps performed in the possible implementations of the third aspect, and implement corresponding technical effects. For details, refer to the third aspect. Details are not described herein again.

According to an eighth aspect of this application, a communication apparatus is provided. The apparatus may implement the method in any one of the fourth aspect or the possible implementations of the fourth aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The apparatus includes a processing unit and a transceiver unit.

The processing unit is configured to determine sixth indication information, where the sixth indication information indicates a resource element RE occupied by a beamformed CSI-RS.

The transceiver unit is configured to send the sixth indication information.

The processing unit is further configured to determine the CSI-RS, where the CSI-RS is used to perform channel measurement to obtain uplink precoding information of P RB sets, each RB set in the P RB sets includes one or more RBs, different RB sets in the P RB sets correspond to different uplink precoding information, and P is greater than or equal to 2.

The transceiver unit is further configured to send the CSI-RS.

The transceiver unit is further configured to receive uplink information based on the uplink precoding information of the P RB sets.

In a possible implementation of the eighth aspect, when there is an RB set including a plurality of RBs in the P RB sets, the plurality of RBs in the RB set have same uplink precoding information.

In a possible implementation of the eighth aspect, the uplink information is carried on some or all RBs in the P RB sets.

In a possible implementation of the eighth aspect, RBs included in the P RB sets are uplink resources scheduled for the terminal device.

In a possible implementation of the eighth aspect, the transceiver unit is further configured to send seventh indication information, where the seventh indication information indicates that each RB set in the P RB sets includes one or more RBs in the uplink resources scheduled for the terminal device.

In a possible implementation of the eighth aspect, the seventh indication information includes a value of P or a quantity of RBs included in each RB set.

In a possible implementation of the eighth aspect, RBs included in the P RB sets are frequency domain resources corresponding to an uplink BWP of the terminal device.

In a possible implementation of the eighth aspect, the transceiver unit is further configured to send eighth indication information, where the eighth indication information indicates that each RB set in the P RB sets includes one or more RBs in the frequency domain resources corresponding to the uplink BWP of the terminal device.

In a possible implementation of the eighth aspect, the eighth indication information includes a value of P or a quantity of RBs included in each RB set.

In a possible implementation of the eighth aspect, when there is an RB set including a plurality of RBs in the P RB sets, RB indexes of the plurality of RBs are consecutive.

In a possible implementation of the eighth aspect, each RB set in the P RB sets includes a same quantity of RBs.

In a possible implementation of the eighth aspect, resource elements REs occupied by the beamformed CSI-RS include P groups of REs, the P groups of REs are respectively used to determine the uplink precoding information of the P RB sets, and different groups in the P groups of REs occupy a same quantity of REs.

Alternatively, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

In the eighth aspect of embodiments of this application, composition modules of the communication apparatus may be further configured to perform the steps performed in the possible implementations of the fourth aspect, and implement corresponding technical effects. For details, refer to the fourth aspect. Details are not described herein again.

According to a ninth aspect of embodiments of this application, a communication apparatus is provided, including at least one processor, where the at least one processor is coupled to a memory.

The memory is configured to store a program or instructions.

The at least one processor is configured to execute the program or the instructions, so that the apparatus implements the method according to any one of the first aspect or the possible implementations of the first aspect, or the apparatus implements the method according to any one of the second aspect or the possible implementations of the second aspect, or the apparatus implements the method according to any one of the third aspect or the possible implementations of the third aspect, or the apparatus implements the method according to any one of the fourth aspect or the possible implementations of the fourth aspect.

According to a tenth aspect of embodiments of this application, a communication apparatus is provided, including at least one logic circuit and an input/output interface.

The input/output interface is configured to input first indication information and DCI.

The input/output interface is configured to output uplink information.

The logic circuit is configured to perform the method according to any one of the first aspect or the possible implementations of the first aspect.

According to an eleventh aspect of embodiments of this application, a communication apparatus is provided, including at least one logic circuit and an input/output interface.

The input/output interface is configured to output first indication information and DCI.

The input/output interface is configured to input uplink information.

The logic circuit is configured to perform the method according to any one of the second aspect or the possible implementations of the second aspect.

According to a twelfth aspect of embodiments of this application, a communication apparatus is provided, including at least one logic circuit and an input/output interface.

The input/output interface is configured to input sixth indication information and CSI-RS.

The input/output interface is configured to output uplink information.

The logic circuit is configured to perform the method according to any one of the third aspect or the possible implementations of the third aspect.

According to a thirteenth aspect of embodiments of this application, a communication apparatus is provided, including at least one logic circuit and an input/output interface.

The input/output interface is configured to output sixth indication information and CSI-RS.

The input/output interface is configured to input uplink information.

The logic circuit is configured to perform the method according to any one of the fourth aspect or the possible implementations of the fourth aspect.

According to a fourteenth aspect of embodiments of this application, a computer-readable storage medium is provided. The computer-readable storage medium is configured to store one or more computer-executable instructions, and when the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

According to a fifteenth aspect of embodiments of this application, a computer program product (or referred to as a computer program) is provided. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

According to a sixteenth aspect of embodiments of this application, a chip system is provided. The chip system includes at least one processor, configured to support a communication apparatus in implementing a function in any one of the first aspect or the possible implementations of the first aspect, or configured to support a communication apparatus in implementing a function in any one of the second aspect or the possible implementations of the second aspect, or configured to support a communication apparatus in implementing a function in any one of the third aspect or the possible implementations of the third aspect, or configured to support a communication apparatus in implementing a function in any one of the fourth aspect or the possible implementations of the fourth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

According to a seventeenth aspect of embodiments of this application, a communication system is provided. The communication system includes the communication apparatus in the fifth aspect and the communication apparatus in the sixth aspect, and/or the communication system includes the communication apparatus in the seventh aspect and the communication apparatus in the eighth aspect, and/or the communication system includes the communication apparatus in the ninth aspect, and/or the communication system includes the communication apparatus in the tenth aspect and the communication apparatus in the eleventh aspect, and/or the communication system includes the communication apparatus in the twelfth aspect and the communication apparatus in the thirteenth aspect.

For technical effects brought by any design of the fifth aspect to the seventeenth aspect, refer to the technical effects brought by different implementations of the first aspect to the fourth aspect. Details are not described herein.

It should be understood that, for a component in a device, the foregoing "sending" may be referred to as "output", and the foregoing "receiving" may be referred to as "input".

It can be learned from the foregoing technical solutions that embodiments of this application include the following beneficial effects.

In some implementations, the network device may indicate two or more types of uplink precoding information to the terminal device based on the second indication information in the DCI. Compared with an implementation in which the network device indicates same uplink precoding information, this implementation enables the network device to indicate different uplink precoding information of different RB sets to the terminal device, to avoid a performance loss to an extent, and improve communication efficiency. In addition, the first indication information received by the terminal device indicates the quantity of bits occupied by the second indication information. In other words, the terminal device may determine, based on the first indication information, the quantity of bits occupied by the second indication information indicating the uplink precoding information of the P RB sets. In this way, after receiving the DCI, the terminal device may determine the second indication information in the DCI based on the quantity of bits indicated by the first indication information, so that the terminal device can obtain an indicator of the uplink precoding information in the DCI without performing blind detection, to reduce energy consumption of the terminal device.

In some other implementations, the network device may indicate two or more types of uplink precoding information to the terminal device based on the CSI-RS. Compared with an implementation in which the network device indicates same uplink precoding information, these implementations enable the network device to indicate different uplink precoding information of different RB sets to the terminal device, to avoid a performance loss to an extent, and improve communication efficiency. In addition, the sixth indication information received by the terminal device indicates the RE occupied by the beamformed CSI-RS. In other words, the terminal device may determine, based on the sixth indication information, the RE occupied by the CSI-RS indicating the uplink precoding information of the P RB sets. In this way, the terminal device receives the CSI-RS based on the sixth indication information, to prevent the terminal device from obtaining incorrect uplink precoding information.

**BRIEF DESCRIPTION OF DRAWINGS**

FIG. 1 is a diagram of a communication system according to this application;
FIG. 2a is another diagram of a communication system according to this application;
FIG. 2b is another diagram of a communication system according to this application;
FIG. 3a is a diagram of uplink resource scheduling according to this application;
FIG. 3b is a diagram of uplink resource scheduling according to this application;
FIG. 3c is a diagram of uplink resource scheduling according to this application;
FIG. 4 is a diagram of a communication method according to this application;
FIG. 5 is another diagram of a communication method according to this application;
FIG. 6a is a diagram of an information bearing manner according to this application;
FIG. 6b is a diagram of an information bearing manner according to this application;
FIG. 7 is a diagram of a communication apparatus according to this application;
FIG. 8 is another diagram of a communication apparatus according to this application;
FIG. 9 is another diagram of a communication apparatus according to this application; and
FIG. 10 is another diagram of a communication apparatus according to this application.

**DESCRIPTION OF EMBODIMENTS**

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.

(1) Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device like a mobile phone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. The terminal device may alternatively be a wearable device and a terminal device in a next-generation communication system, for example, a terminal device in a 5G communication system or a terminal device in a future evolved public land mobile network (public land mobile network, PLMN).

(2) Network device: The network device may be a device in a wireless network. For example, the network device may be a radio access network (radio access network, RAN) node (or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) Configuration and preconfiguration: In this application, both the configuration and the preconfiguration are used. The configuration means that a network device like a base station or a server sends configuration information of some parameters or parameter values to a terminal through a message or signaling, so that the terminal determines a communication parameter or a transmission resource based on the values or the information. Similar to the configuration, the preconfiguration may be a manner in which a network device like a base station or a server sends parameter information or a value to a terminal through a communication link or a carrier. Alternatively, the preconfiguration may be a manner in which a corresponding parameter or parameter value may be defined (for example, a value of a parameter is specified in a standard), or a manner in which a related parameter or value is written into a terminal device in advance. This is not limited in this application. Further, these values and parameters may be changed or updated.

(4) Precoding technology: When a channel status is known, a sending device may process a to-be-sent signal by using a precoding matrix that matches a channel, and then send the to-be-sent signal, so that the precoded to-be-sent signal adapts to the channel. Therefore, compared with a processing process in which a receiving device receives the sent signal that is not precoded and eliminates inter-channel impact, a processing process in which the receiving device receives the sent signal that is precoded and eliminates the inter-channel impact has less complexity. Therefore, the to-be-sent signal is precoded, so that received signal quality (for example, a signal to interference plus noise ratio (signal to interference plus noise ratio, SINR)) is improved. By using the precoding technology, the sending device and a plurality of receiving devices can perform transmission on a same time-frequency resource. In other words, multi-user multiple-input multiple-output (multi-user multiple-input multiple-output, MU-MIMO) is implemented.

Optionally, the sending device may be a terminal device, and the receiving device may be a network device. Alternatively, the sending device may be a network device, and the receiving device may be a terminal device. Alternatively, the sending device may be a network device, and the receiving device may be a network device. Alternatively, the sending device may be a terminal device, and the receiving device may be a terminal device.

It should be understood that the related descriptions of the precoding technology are merely an example for ease of understanding, and are not intended to limit the protection scope of embodiments of this application. During specific implementation, the sending device may alternatively perform precoding in another manner. For example, when channel information (for example, but not limited to a channel matrix) cannot be obtained, precoding is performed by using a preset precoding matrix or by using weighted processing. For brevity, specific content thereof is not described in this specification again.

(5) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. During specific implementation, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to an extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

(6) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active (ACTIVE) state, and may also be applied to a terminal device in a non-connected (INACTIVE) state or an idle (IDLE) state.

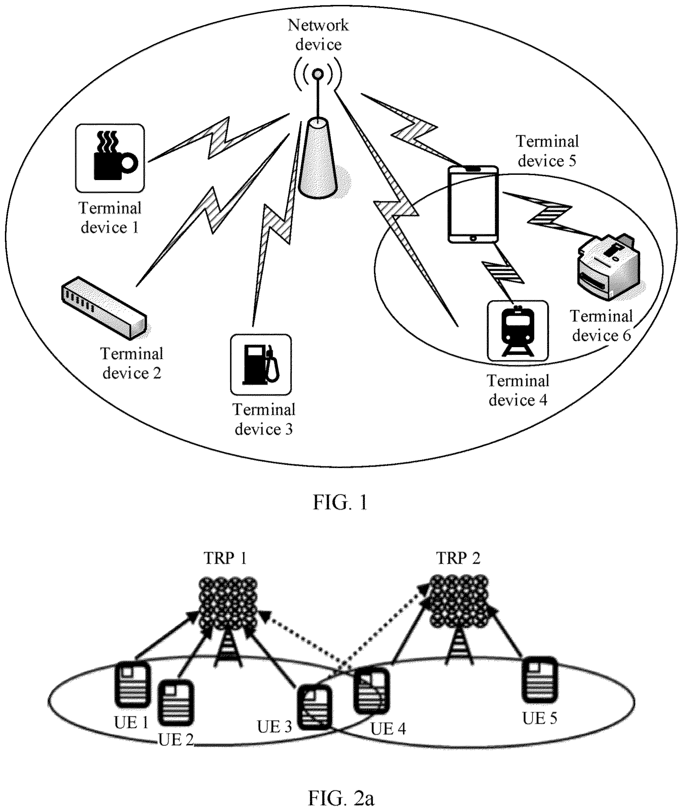

FIG. 1 is a diagram of a communication system according to this application. FIG. 1 shows an example in which there is one network device and six terminal devices. The six terminal devices are respectively a terminal device 1, a terminal device 2, a terminal device 3, a terminal device 4, a terminal device 5, and a terminal device 6. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description. A transmit end may be a network device or a terminal device, and a receive end may be a network device or a terminal device.

As shown in FIG. 1, a configuration information sending entity may be the network device. An example in which the network device is a base station (Base Station) and each terminal device is UE is used for description. Configuration information receiving entities may be UE 1 to UE 6. In this case, the base station and the UE 1 to the UE 6 form a communication system. In the communication system, the UE 1 to the UE 6 may send uplink data to the network device, and the network device needs to receive the uplink data sent by the UE 1 to the UE 6. In addition, the network device may send configuration information to the UE 1 to the UE 6.

For example, in FIG. 1, the UE 4 to the UE 6 may alternatively form a communication system. In this case, both the configuration information sending entity and the configuration information receiving entity may be UEs. The UE 5 serves as the network device, namely, the configuration information sending entity. The UE 4 and the UE 6 serve as terminal devices, namely, configuration information receiving entities. For example, in an Internet of vehicles system, the UE 5 separately sends configuration information to the UE 4 and the UE 6, and receives uplink data sent by the UE 4 and the UE 6. Correspondingly, the UE 4 and the UE 6 receive the configuration information sent by the UE 5, and send the uplink data to the UE 5.

FIG. 2a is another diagram of a communication system according to this application. As shown in FIG. 2a, an example in which a network device includes a TRP 1 and a TRP 2, and a terminal device includes UE 1 to UE 5 is used for description. The TRP 1, the TRP 2, and the UE 1 to the UE 5 may form a communication system. In the communication system, the UE 1 to the UE 5 may send uplink data, and the uplink data sent by the UE 1 to the UE 5 may be received by one of the TRPs (for example, uplink data sent by the UE 1 and the UE 2 in FIG. 2a is received by the TRP 1, and uplink data sent by the UE 5 in FIG. 2a is received by the TRP 2), or may be jointly received by the two TRPs (for example, uplink data sent by the UE 3 in FIG. 2a is received by the TRP 1 and the TRP 2, and uplink data sent by the UE 4 in FIG. 2a is received by the TRP 1 and the TRP 2). In addition, the network device (for example, the TRP 1 and the TRP 2 in FIG. 2a) may send downlink information to the terminal device (for example, the UE 1 to the UE 5 in FIG. 2a).

Optionally, in this application, a quantity of uplink transmission streams and uplink precoding of the terminal device (for example, the UE 1 to the UE 5 in FIG. 2a) are calculated by the network device (for example, the TRP 1 and the TRP 2 in FIG. 2a), and are indicated to the terminal device through downlink information.

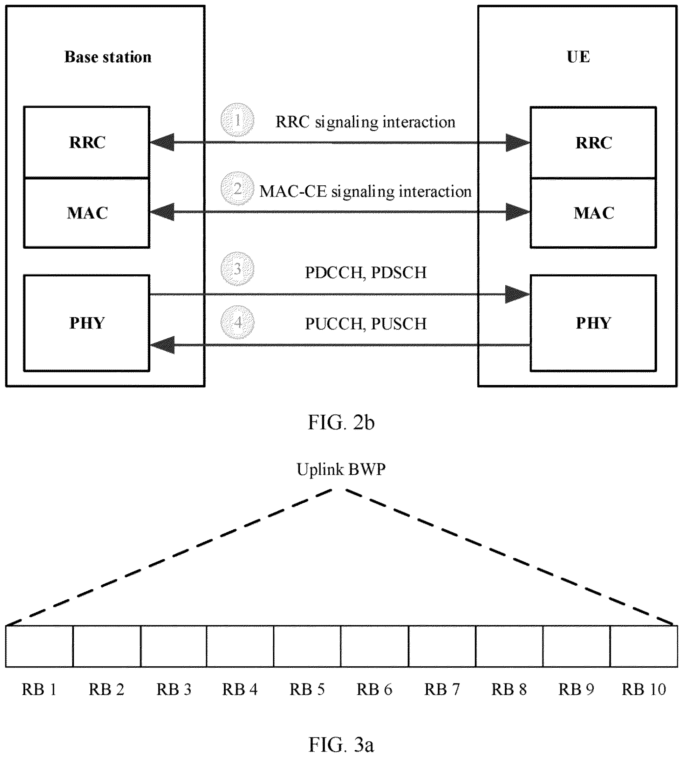

For example, a network element structure in this application is shown in FIG. 2b. Both the network device and the terminal device have the following modules:

a radio resource control (radio resource control, RRC) signaling interaction module, where the network device and the terminal device may send and receive RRC signaling based on the module;
a media access control (media access control, MAC) signaling interaction module, where the network device and the terminal device may send and receive MAC-CE signaling based on the module; and
a physical (physical, PHY) signaling and data exchange module, where the network device and the terminal device may send and receive uplink/downlink control signaling based on the module, for example, the signaling may include signaling carried on a physical downlink control channel (physical downlink control channel, PDCCH), signaling carried on a physical uplink control channel (physical uplink control channel, PUCCH), and the like; or the network device and the terminal device may send and receive uplink/downlink data based on the module, for example, the data may include data carried on a physical downlink shared channel (physical downlink shared channel, PDSCH), data carried on a physical uplink shared channel (physical uplink shared channel, PUSCH), and the like.

It should be understood that the foregoing content is merely some examples of the communication system in this application. A communication system to which the communication method and the communication apparatus provided in this application are applied may include but is not limited to the foregoing communication system.

The communication system shown in FIG. 1 or FIG. 2a may be applied to an uplink multi-user multiple-input multiple-output (multi-user multiple-input multiple-output, MU-MIMO) system. In the MU-MIMO system, uplink precoding is important in system capacity and spectral efficiency. After determining uplink precoding information of a terminal device, a network device needs to indicate the uplink precoding information to the corresponding terminal device.

Currently, an uplink bandwidth used by the terminal device includes a plurality of consecutive frequency domain resources corresponding to an uplink BWP, and the frequency domain resource may be a resource block (resource block, RB) or a resource block group (resource block group, RBG). Correspondingly, the network device indicates same uplink precoding information for the plurality of consecutive frequency domain resources. To be specific, an uplink precoding information indicator sent by the network device indicates a specific type of uplink precoding information, so that the terminal device sends uplink information on the plurality of consecutive frequency domain resources based on the uplink precoding information.

Optionally, the uplink precoding information indicator sent by the network device may be referred to as a transmitted precoding matrix indicator (transmitted precoding matrix indicator, TPMI).

For example, the frequency domain resources corresponding to the uplink BWP used by the terminal device may be implemented by using an example shown in FIG. 3a. As shown in FIG. 3a, for example, the frequency domain resources corresponding to the uplink BWP include 10 RBs that are consecutive in frequency domain, namely, an RB 1 to an RB 10 in FIG. 3a. The TPMI sent by the network device to the terminal device indicates one piece of uplink precoding information used by the terminal device on the 10 RBs. Then, the terminal device sends the uplink information on the 10 RBs based on the uplink precoding information.

However, different frequency domain resources correspond to different transmission channels. In the foregoing indication manner of the uplink precoding information, the terminal device uses the same uplink precoding information on the plurality of consecutive frequency domain resources. This easily causes a performance loss, and affects communication efficiency.

In addition, in the MU-MIMO system, to implement multi-user resource reuse, the network device may need to divide a plurality of consecutive frequency domain resources corresponding to a BWP into a plurality of parts of frequency domain resources (where different parts of the plurality of parts of frequency domain resources may have overlapping frequency domain resources, or different parts of the plurality of parts of frequency domain resources do not have overlapping frequency domain resources, and this is not limited herein), and schedule the plurality of parts of frequency domain resources for different terminal devices to use. It is considered that a channel on each RB is different. From a perspective of optimal performance, uplink precoding used on each RB needs to be correspondingly designed based on a channel of the RB. Therefore, optimal precoding on different RBs may be different. If the network device continues to use the foregoing indication manner of the uplink precoding information, the network device may send one TPMI for each RB in the frequency domain resources scheduled for the terminal device, to indicate uplink precoding information corresponding to each RB in the frequency domain resources scheduled for the terminal device.

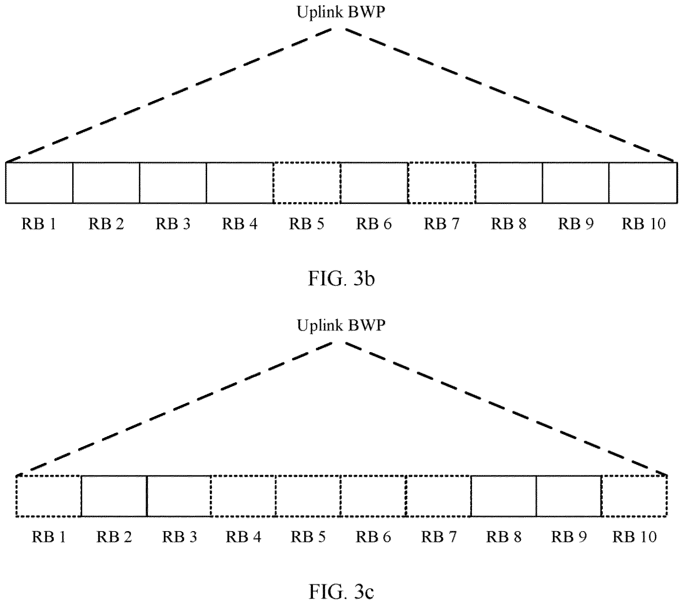

However, for a terminal device, a size of a frequency domain resource scheduled for the terminal device is not fixed. Correspondingly, a quantity of TPMIs sent by the network device to the terminal device may change. As a result, the terminal device needs to perform blind detection on information sent by the network device, to determine corresponding uplink precoding information. The following provides descriptions with reference to implementation examples shown in FIG. 3b and FIG. 3c.

In an implementation, frequency domain resources scheduled by the network device for the terminal device are shown in FIG. 3b. In FIG. 3b, an example in which the frequency domain resources corresponding to the uplink BWP include 10 RBs that are consecutive in frequency domain, namely, an RB 1 to an RB 10 in FIG. 3b, is still used. For a terminal device, RBs corresponding to solid boxes shown in FIG. 3b are frequency domain resources that are scheduled for the terminal device, namely, the RB 1, the RB 2, the RB 3, the RB 4, the RB 6, the RB 8, the RB 9, and the RB 10 in FIG. 3b, which are eight RBs in total; and RBs corresponding to dashed boxes shown in FIG. 3b are frequency domain resources that are not scheduled for the terminal device (or referred to as unavailable frequency domain resources of the terminal device), namely, the RB 5 and the RB 7 in FIG. 3b, which are two RBs in total.

In another implementation, frequency domain resources scheduled by the network device for the terminal device are shown in FIG. 3c. In FIG. 3c, an example in which the frequency domain resources corresponding to the uplink BWP include 10 RBs that are consecutive in frequency domain, namely, an RB 1 to an RB 10 in FIG. 3c, is still used. For a terminal device, RBs corresponding to solid boxes shown in FIG. 3c are frequency domain resources that are scheduled for the terminal device, namely, the RB 2, the RB 3, the RB 8, and the RB 9 in FIG. 3c, which are four RBs in total; and RBs corresponding to dashed boxes shown in FIG. 3c are frequency domain resources that are not scheduled for the terminal device (or referred to as unavailable frequency domain resources of the terminal device), namely, the RB 1, the RB 4, the RB 5, the RB 6, the RB 7, and the RB 10 in FIG. 3c, which are six RBs in total.

It should be understood that in the examples shown in FIG. 3b and FIG. 3c, only an example in which the frequency domain resources corresponding to the uplink BWP include 10 RBs that are consecutive in frequency domain is used for description. The frequency domain resources corresponding to the uplink BWP include a plurality of frequency domain resources that are consecutive in frequency domain. A granularity of the "frequency domain resource" may be an RE, an RB, an RBG, or another frequency domain granularity. In this example, only an example in which the granularity of the "frequency domain resource" is an RB is used for description. In addition, in the "plurality of frequency domain resources", a value of "the plurality of" may be any natural number greater than or equal to 2. In this example, only an example in which the value of "the plurality of" is 10 is used for description.

Herein, an example in which bits included in the TPMI are 6 bits (bits) is used for description. In the scenario shown in FIG. 3b, an uplink precoding indicator that needs to be sent by the network device to the terminal device includes "eight TPMIs", namely, 48 bits. In the scenario shown in FIG. 3c, an uplink precoding indicator that needs to be sent by the network device to the terminal device includes "four TPMIs", namely, 24 bits. Therefore, it can be learned that if the manner of using a same precoding indicator in the plurality of consecutive frequency domain resources is applied to the scenario shown in FIG. 3b or FIG. 3c, overheads of the uplink precoding indicator (namely, the TPMI) dynamically change. As a result, blind detection pressure of the terminal device greatly increases.

In conclusion, in a current implementation of the uplink precoding indicator provided by the network device, only an indicator based on same uplink precoding information can be implemented. In addition, if the implementation is directly extended to an application scenario in which the terminal device uses an unfixed scheduled bandwidth, the terminal device performs blind detection based on received information, resulting in high energy consumption of the terminal device.

To resolve the foregoing technical problem, this application provides a communication method and a communication apparatus. The following describes, with reference to more accompanying drawings and embodiments, the communication method and the communication apparatus that are provided in this application.

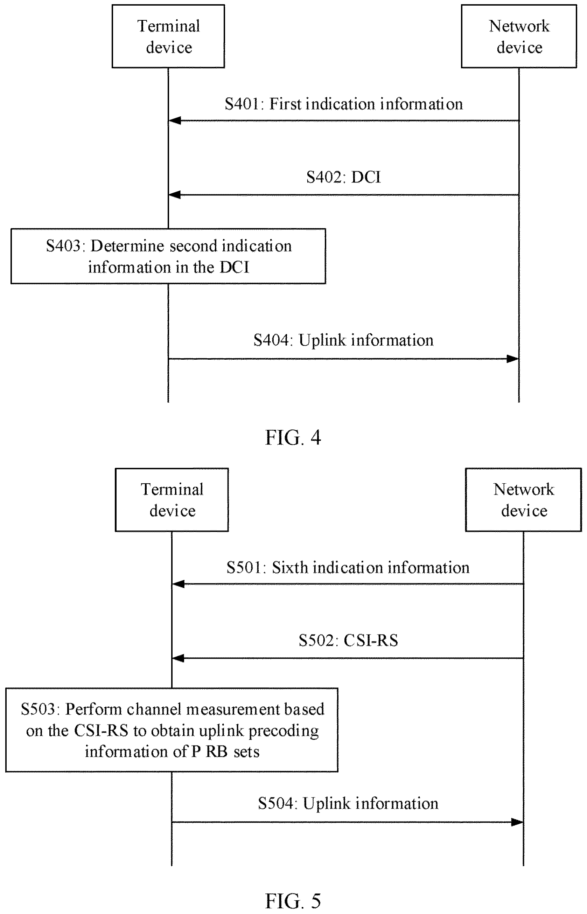

FIG. 4 is a diagram of a communication method according to this application. The method includes the following steps.

S401: A network device sends first indication information.

In this embodiment, the network device sends the first indication information in step S401, and correspondingly, a terminal device receives the first indication information in step S401. The first indication information indicates a quantity of bits occupied by second indication information, and the second indication information indicates uplink precoding information of P RB sets.

Optionally, the first indication information sent by the network device in step S401 may be carried in an RRC message, a MAC CE message, a physical downlink control channel (physical downlink control channel, PDCCH) message, or another message. This is not limited herein.

S402: The network device sends DCI.

In this embodiment, the network device sends the DCI in step S402, and correspondingly, the terminal device receives the DCI in step S402. The DCI includes the second indication information.

It should be noted that a sequence of performing step S401 and step S402 is not limited in this application. For example, the network device may first perform step S401 and then perform step S402. It is generally considered that in this case, the terminal device may first receive the first indication information and then receive the DCI. For another example, the network device may first perform step S402 and then perform step S401. It is generally considered that in this case, the terminal device may first receive the DCI and then receive the first indication information.

S403: The terminal device determines the second indication information in the DCI.

In this embodiment, after the terminal device receives the DCI in step S402, the terminal device determines the second indication information in the DCI based on the first indication information received in step S401.

Optionally, a location of the second indication information in the DCI may be referred to as a TPMI field (field). In other words, a quantity of bits occupied by the TPMI field in the DCI may be determined based on the first indication information, to determine the TPMI field.

Specifically, in step S403, the second indication information determined by the terminal device in the DCI indicates the uplink precoding information of the P RB sets. Each resource block RB set in the P RB sets includes one or more RBs, different RB sets in the P RB sets correspond to different uplink precoding information, and P is greater than or equal to 2.

In a possible implementation, when there is an RB set including a plurality of RBs in the P RB sets, the plurality of RBs in the RB set have same uplink precoding information. Specifically, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation, the second indication information included in the DCI indicates the uplink precoding information of the P RB sets, and the RBs included in the P RB sets may be implemented in a plurality of manners. The following provides a further description with reference to some implementation examples.

Implementation 1: The RBs included in the P RB sets are uplink resources scheduled for the terminal device.

In a possible implementation, the RBs included in the P RB sets indicated by the second indication information are RBs corresponding to the uplink resources scheduled for the terminal device. In other words, the uplink precoding indicator (namely, the second indication information) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

For example, in Implementation 1, the RBs included in the P RB sets may be the uplink resources scheduled for the terminal device. Implementation 1 is described herein as an example with reference to the scenario example shown in FIG. 3b or FIG. 3c. The RBs included in the P RB sets may be RBs that are in the 10 RBs corresponding to the uplink BWP and that are scheduled for the terminal device to use. In other words, the RBs included in the P RB sets are "the RB 1, the RB 2, the RB 3, the RB 4, the RB 6, the RB 8, the RB 9, and the RB 10, which are eight RBs in total" shown in FIG. 3b; or the RBs included in the P RB sets are "the RB 2, the RB 3, the RB 8, and the RB 9, which are four RBs in total" shown in FIG. 3c.

Optionally, in Implementation 1, the method further includes: The terminal device receives third indication information from the network device, where the third indication information indicates that each RB set in the P RB sets includes one or more RBs in the uplink resources scheduled for the terminal device.

Optionally, the third indication information sent by the network device may be carried in an RRC message, a MAC CE message, a PDCCH message, or another message. This is not limited herein.

It should be noted that the terminal device may receive the third indication information in any process before step S404. For example, the terminal device may receive the third indication information after (or before) step S403, the terminal device may receive the third indication information after (or before) step S402, or the terminal device may receive the third indication information after (or before) step S401. This is not limited herein.

Specifically, when the RBs included in the P RB sets are the uplink resources scheduled for the terminal device, that is, when all the RBs in the P RB sets are located in the uplink resources scheduled for the terminal device, the third indication information indicates an association relationship between an RB in the P RB sets and an RB in the uplink resources scheduled for the terminal device. In this way, the terminal device can determine, based on the association relationship and the second indication information, the uplink precoding information corresponding to the uplink resources scheduled for the terminal device, and further send the uplink information on the uplink resources scheduled for the terminal device.

Optionally, the third indication information includes a value of P or a quantity of RBs included in each RB set in the P RB sets. Specifically, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the third indication information sent by the network device may include the value of P, so that the terminal device determines, based on the value of P, the RBs included in each RB set in the P RB sets. Alternatively, the third indication information sent by the network device may include the quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

Optionally, different RB sets in the P RB sets may not include a same quantity of RBs. In other words, at least two RB sets in the P RB sets include different quantities of RBs.

For example, the implementation scenario shown in FIG. 3b is still used as an example for further description herein. The RBs included in the P RB sets are the uplink resources scheduled for the terminal device, that is, the RBs included in the P RB sets are "the RB 1, the RB 2, the RB 3, the RB 4, the RB 6, the RB 8, the RB 9, and the RB 10, which are eight RBs in total" shown in FIG. 3b.

In the example shown in FIG. 3b, the terminal device determines, based on the obtained third indication information, RBs included in different RB sets in the P RB sets. In other words, the terminal device determines, based on the third indication information, that RBs included in a first RB set in the P RB sets are one or more RBs in the "eight RBs" shown in FIG. 3b, and RBs included in a second RB set in the P RB sets are one or more RBs in the "eight RBs" shown in FIG. 3b, .... By analogy, the terminal device may determine, based on the third indication information, RBs included in different RB sets in the P RB sets.

In an implementation, if different RB sets in the P RB sets include a same quantity of RBs, the third indication information may indicate, to the terminal device by using an RB index, RBs included in different RB sets in the P RB sets.

Optionally, RB indexes included in different RB sets in the P RB sets may continue to be RB indexes used by the uplink BWP. In this case, an example in which each RB set in the P RB sets includes two RBs is used. In the scenario shown in FIG. 3b, an indication manner of the third indication information sent by the network device may be as follows:

RBs included in a first RB set are "the RB 1 and the RB 2";
RBs included in a second RB set are "the RB 3 and the RB 4";
RBs included in a third RB set are "the RB 6 and the RB 8"; and
RBs included in a fourth RB set are "the RB 9 and the RB 10".

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order. In this case, the example in which each RB set in the P RB sets includes two RBs is still used herein.

In the scenario shown in FIG. 3b, if the eight RBs included in the P RB sets are sorted in ascending order, RB indexes of frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are inconsecutive because "the RB 5 and the RB 7" are missing. After the "eight RBs" are reordered, "the RB 1, the RB 2, the RB 3, the RB 4, the RB 5, the RB 6, the RB 7, and the RB 8, which are eight RBs in total" may be obtained. In this case, an indication manner of the third indication information sent by the network device may be as follows:

RBs included in a first RB set are "the RB 1 and the RB 2";
RBs included in a second RB set are "the RB 3 and the RB 4";
RBs included in a third RB set are "the RB 5 and the RB 6"; and
RBs included in a fourth RB set are "the RB 7 and the RB 8".

In the scenario shown in FIG. 3b, if the eight RBs included in the P RB sets are sorted in descending order, after frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are reordered, "the RB 8, the RB 7, the RB 6, the RB 5, the RB 4, the RB 3, the RB 2, and the RB 1, which are eight RBs in total" may be obtained. In this case, an indication manner of the third indication information sent by the network device may be as follows:

RBs included in a first RB set are "the RB 8 and the RB 7";
RBs included in a second RB set are "the RB 6 and the RB 5";
RBs included in a third RB set are "the RB 4 and the RB 3"; and
RBs included in a fourth RB set are "the RB 2 and the RB 1".

In another implementation, if different RB sets in the P RB sets may not necessarily include a same quantity of RBs, when at least two RB sets in the P RB sets include different quantities of RBs, the third indication information may indicate, to the terminal device by using an RB index, RBs included in different RB sets in the P RB sets. The following use an example in which each segment of adjacent consecutive RBs are used as different RBs in the P RB sets for description.

Optionally, RB indexes included in different RB sets in the P RB sets may continue to be RB indexes used by the uplink BWP. In this case, in the scenario shown in FIG. 3b, an indication manner of the third indication information sent by the network device may be as follows:

RBs included in a first RB set are "the RB 1, the RB 2, the RB 3, and the RB 4";
an RB included in a second RB set is "the RB 6"; and
RBs included in a third RB set are "the RB 8, the RB 9, and the RB 10".

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order. In this case, the example in which each RB set in the P RB sets includes two RBs is still used herein.

In the scenario shown in FIG. 3b, if the eight RBs included in the P RB sets are sorted in ascending order, RB indexes of frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are inconsecutive because "the RB 5 and the RB 7" are missing. After the "eight RBs" are reordered, "the RB 1, the RB 2, the RB 3, the RB 4, the RB 5, the RB 6, the RB 7, and the RB 8, which are eight RBs in total" may be obtained. In this case, an indication manner of the third indication information sent by the network device may be as follows:

RBs included in a first RB set are "the RB 1, the RB 2, the RB 3, and the RB 4";
an RB included in a second RB set is "the RB 5"; and
RBs included in a third RB set are "the RB 6, the RB 7, and the RB 8".

In the scenario shown in FIG. 3b, if the eight RBs included in the P RB sets are sorted in descending order, after frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are reordered, "the RB 8, the RB 7, the RB 6, the RB 5, the RB 4, the RB 3, the RB 2, and the RB 1, which are eight RBs in total" may be obtained. In this case, an indication manner of the third indication information sent by the network device may be as follows:

RBs included in a first RB set are "the RB 8, the RB 7, the RB 6, and the RB 5";
an RB included in a second RB set is "the RB 4"; and
RBs included in a third RB set are "the RB 3, the RB 2, and the RB 1".

It should be noted that the foregoing example is merely an example for description. The network device may use, based on an actual channel status, RBs with a same channel or similar channels in the uplink resources scheduled for the terminal device (for example, "the RB 1, the RB 2, the RB 3, the RB 4, the RB 6, the RB 8, the RB 9, and the RB 10, which are eight RBs in total in FIG. 3b" or "the RB 2, the RB 3, the RB 8, and the RB 9, which are four RBs in total in FIG. 3c) as a same RB set, to determine RBs included in each RB set in the P RB sets, and indicate the RBs to the terminal device by using the third indication information.

It should be understood that, in the foregoing implementation example related to index sorting, an example in which a number "1" is used as a start of an index is used for description. In an actual application, another number may be used as a start of an index, for example, "0", "2", or another value. This is not limited herein.

Implementation 2: RBs included in the P RB sets are frequency domain resources corresponding to an uplink bandwidth part (bandwidth part, BWP) of the terminal device.

In a possible implementation, the RBs included in the P RB sets indicated by the second indication information are the frequency domain resources corresponding to the uplink BWP of the terminal device. In other words, the uplink precoding indicator (namely, the second indication information) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

For example, in Implementation 2, the RBs included in the P RB sets may be the uplink resources scheduled for the terminal device. Implementation 2 is described herein as an example with reference to the scenario example shown in FIG. 3b. The RBs included in the P RB sets may be RBs that are in the 10 RBs corresponding to the uplink BWP and that are scheduled for the terminal device to use. In other words, the RBs included in the P RB sets are "the RB 1 to the RB 10, which are 10 RBs in total" shown in FIG. 3b. However, the frequency domain resources scheduled for the terminal device in the uplink BWP are "the RB 1, the RB 2, the RB 3, the RB 4, the RB 6, the RB 8, the RB 9, and the RB 10, which are eight RBs in total" shown in FIG. 3b. After receiving the second indication information, the terminal device may determine uplink precoding information of the "eight RBs" based on the second indication information, to determine the uplink precoding information corresponding to the uplink information sent in step S504.

Optionally, in the implementation example shown in FIG. 3b, because "the RB 5 and the RB 7, which are two RBs in total" are not scheduled for the terminal device, the terminal device may subsequently fail to send the uplink information based on the "two RBs". Correspondingly, in this implementation, the terminal device may determine, based on the second indication information, uplink precoding information corresponding to the "eight RBs", and does not need to further determine, based on the second indication information, uplink precoding information corresponding to the "two RBs", to reduce energy consumption of the terminal device.

Optionally, in Implementation 2, the method further includes: The terminal device receives fourth indication information, where the fourth indication information indicates that each RB set in the P RB sets includes one or more RBs in the frequency domain resources corresponding to the uplink BWP of the terminal device.

Optionally, the fourth indication information sent by the network device may be carried in an RRC message, a MAC CE message, a PDCCH message, or another message. This is not limited herein.

It should be noted that the terminal device may receive the fourth indication information in any process before step S404. For example, the terminal device may receive the fourth indication information after (or before) step S403, the terminal device may receive the fourth indication information after (or before) step S402, or the terminal device may receive the fourth indication information after (or before) step S401. This is not limited herein.

Specifically, when the RBs included in the P RB sets are the frequency domain resources corresponding to the uplink BWP, that is, when all the RBs in the P RB sets are located in the frequency domain resources corresponding to the uplink BWP, the third indication information indicates an association relationship between an RB in the P RB sets and an RB in the frequency domain resources corresponding to the uplink BWP. In this way, the terminal device can determine, based on the association relationship and the second indication information, the uplink precoding information corresponding to the uplink resources scheduled for the terminal device in the frequency domain resources corresponding to the uplink BWP, and further send the uplink information on the uplink resources scheduled for the terminal device.

Optionally, the fourth indication information includes a value of P or a quantity of RBs included in each RB set. Specifically, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the fourth indication information sent by the network device may include the value of P, so that the terminal device determines, based on the value of P, RBs included in each RB set in the P RB sets. Alternatively, the fourth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

Optionally, different RB sets in the P RB sets may not necessarily include a same quantity of RBs. In other words, at least two RB sets in the P RB sets include different quantities of RBs.

For example, the implementation scenario shown in FIG. 3a is still used as an example for further description herein. The RBs included in the P RB sets are the frequency domain resources corresponding to the uplink BWP. In other words, the RBs included in the P RB sets are "the RB 1 to the RB 10, which are 10 RBs in total" shown in FIG. 3a.

In the example shown in FIG. 3a, the terminal device determines, based on the obtained fourth indication information, RBs included in different RB sets in the P RB sets. In other words, the terminal device determines, based on the fourth indication information, that RBs included in a first RB set in the P RB sets are one or more RBs in the "10 RBs" shown in FIG. 3a, and RBs included in a second RB set in the P RB sets are one or more RBs in the " 10 RBs" shown in FIG. 3a, .... By analogy, the terminal device may determine, based on the fourth indication information, RBs included in different RBs in the P RB sets.

In an implementation, if different RB sets in the P RB sets include a same quantity of RBs, the fourth indication information may indicate, to the terminal device by using an RB index, RBs included in different RB sets in the P RB sets. When all the RBs in the P RB sets are located in the frequency domain resources corresponding to the uplink BWP, and there is an RB set including a plurality of RBs in the P RB sets, RB indexes of the plurality of RBs are consecutive in the frequency domain resources corresponding to the uplink BWP. In other words, the terminal device determines an order of RBs included in the frequency domain resources corresponding to the uplink BWP, to obtain RB indexes in ascending or descending order. When there is an RB set including a plurality of RBs in the P RB sets, RB indexes of the plurality of RBs are consecutive in the RB indexes in ascending or descending order.

Optionally, in this case, an example in which each RB set in the P RB sets includes two RBs is used. If RB indexes are consecutive in RB indexes in ascending order, in the scenario shown in FIG. 3a, an indication manner of the third indication information sent by the network device may be as follows:

RBs included in a first RB set are "the RB 1 and the RB 2";
RBs included in a second RB set are "the RB 3 and the RB 4";
RBs included in a third RB set are "the RB 5 and the RB 6";
RBs included in a fourth RB set are "the RB 7 and the RB 8"; and
RBs included in a fifth RB set are "the RB 9 and the RB 10".

Optionally, in this case, an example in which each RB set in the P RB sets includes two RBs is used. If RB indexes are consecutive in RB indexes in descending order, in the scenario shown in FIG. 3a, an indication manner of the third indication information sent by the network device may be as follows:

RBs included in a first RB set are "the RB 10 and the RB 9";
RBs included in a second RB set are "the RB 8 and the RB 7";
RBs included in a third RB set are "the RB 6 and the RB 5";
RBs included in a fourth RB set are "the RB 4 and the RB 3"; and
RBs included in a fifth RB set are "the RB 2 and the RB 1".

In another implementation, if different RB sets in the P RB sets may not necessarily include a same quantity of RBs, when at least two RB sets in the P RB sets include different quantities of RBs, the fourth indication information may indicate, to the terminal device by using an RB index, RBs included in different RB sets in the P RB sets. The following use an example in which each segment of adjacent consecutive RBs are used as different RBs in the P RB sets for description.

Optionally, in the scenario shown in FIG. 3a, an indication manner of the fourth indication information sent by the network device may be as follows:

RBs included in a first RB set are "the RB 1, the RB 2, the RB 3, the RB 4, and the RB 5";
RBs included in a second RB set are "the RB 6 and the RB 7"; and
RBs included in a third RB set are "the RB 8, the RB 9, and the RB 10".

It should be noted that the foregoing example is merely an example for description. The network device may use, based on an actual channel status, RBs with a same channel or similar channels in the frequency domain resources corresponding to the uplink BWP (for example, "the RB 1 to the RB 10 in FIG. 3a) as a same RB set, to determine RBs included in each RB set in the P RB sets, and indicate the RBs to the terminal device by using the fourth indication information.

It should be understood that, in the foregoing implementation example related to index sorting, an example in which a number "1" is used as a start of an index is used for description. In an actual application, another number may be used as a start of an index, for example, "0", "2", or another value. This is not limited herein.

In a possible implementation, the uplink precoding information of the P RB sets is determined based on a first codebook, and the first codebook is any one of the following:

a preconfigured codebook;
a codebook determined in at least two codebooks based on the value of P; or
a codebook corresponding to a DFT oversampling matrix generated based on the value of P.

Specifically, the terminal device may determine the uplink precoding information of the P RB sets in the first codebook based on the second indication information. The first codebook may be determined in the foregoing plurality of manners, to improve flexibility of implementing the solution.

In a possible implementation, the uplink precoding information of the P RB sets is determined based on a first codebook. The method further includes: The terminal device receives fifth indication information, where the fifth indication information indicates that the first codebook is any one of the following:

a preconfigured codebook;
a codebook determined in at least two codebooks based on the value of P; or
a codebook corresponding to a DFT oversampling matrix generated based on the value of P.

Optionally, the fifth indication information sent by the network device may be carried in an RRC message, a MAC CE message, a PDCCH message, or another message. This is not limited herein.

Specifically, the terminal device may further determine, based on the fifth indication information sent by the network device, that the first codebook used to determine the uplink precoding information of the P RB sets is determined in one of the plurality of implementations, and further determine the uplink precoding information of the P RB sets.

Optionally, when the first codebook is a preconfigured codebook, the terminal device may determine the uplink precoding information of the P RB sets in the preconfigured codebook based on the second indication information.

For example, herein, the terminal device is equipped with four transmit antennas. The preconfigured codebook may be any one of the following:

a fully coherent codebook, namely, column codebookSubset = fullyAndPartialAndNonCoherent in Table 7.3.1.1.2-2 in 3GPP TS 38.212 R16;
a partially coherent codebook, namely, column codebookSubset = PartialAndNonCoherent in Table 7.3.1.1.2-2 in 3GPP TS 38.212 R16; or
a non-coherent codebook, namely, column codebookSubset = noncoherent in Table 7.3.1.1.2-2 in 3GPP TS 38.212 R16.

Optionally, when the first codebook is a codebook determined in at least two codebooks based on the value of P, the terminal device may determine a codebook in the at least two codebooks based on the value of P, and further determine the uplink precoding information of the P RB sets in the determined codebook based on the second indication information.

Further, optionally, any two codebooks in the at least two codebooks are different. Any two codebooks in the at least two codebooks may be completely different from each other; or any two codebooks in the at least two codebooks may not be completely the same (that is, any two codebooks in the at least two codebooks may have partially same uplink precoding information and partially different uplink precoding information).

Herein, an example in which the any two codebooks include a first codebook and a second codebook is used for description. The first codebook may include A pieces of uplink precoding information, the second codebook may include B pieces of uplink precoding information, and both A and B are integers greater than or equal to 1. The foregoing implementations include the following.

When any two codebooks in the at least two codebooks may be completely different, any one of the A pieces of uplink precoding information is different from any one of the B pieces of uplink precoding information.

When any two codebooks in the at least two codebooks may not be completely the same, at least one piece of uplink precoding information in the A pieces of uplink precoding information is the same as one piece of uplink precoding information in the B pieces of uplink precoding information.

For example, herein, the terminal device is equipped with four transmit antennas. If the terminal device determines, in the second indication information based on the value of P, that a quantity of bits occupied by an RB set in the P RB sets is x, the terminal device may determine a first codebook corresponding to uplink precoding information corresponding to an RB in the RB set in the following implementation:

if a value of x is 6, a fully coherent codebook, namely, column codebookSubset = fullyAndPartialAndNonCoherent in Table 7.3.1.1.2-2 in 3GPP TS 38.212 R16, is used as the first codebook;
if a value of x is 5, a partially coherent codebook, namely, column codebookSubset = PartialAndNonCoherent in Table 7.3.1.1.2-2 in 3GPP TS 38.212 R16, is used as the first codebook;
if a value of x is 4, a non-coherent codebook, namely, column codebookSubset = noncoherent in Table 7.3.1.1.2-2 in 3GPP TS 38.212 R16, is used as the first codebook;
if a value of x is 3, a part of a non-coherent codebook is used as the first codebook, that is, two codewords are respectively removed from a rank 1 and a rank 2 in the non-coherent codebook; or
if a value of x is 2, a part of a non-coherent codebook is used as the first codebook, that is, only one codeword is reserved for each rank.

In addition, if a value of x is 7, a 4T single stream is selected to transmit 28 codewords, and a codeword is inserted between every two adjacent codewords to obtain the first codebook.

If a value of x is 8, a codeword is inserted between every two adjacent codewords in "the codebook in which a value of x is 7", to obtain the first codebook.

If a value of x is 9, a codeword is inserted between every two adjacent codewords in "the codebook in which a value of x is 8", to obtain the first codebook.

By analogy, when a value of x is greater than 9, similar processing may be further performed based on "the codebook in which a value of x is 9" to obtain the first codebook.

Optionally, when the first codebook is a codebook corresponding to a DFT oversampling matrix generated based on the value of P, after generating the DFT oversampling matrix based on the value of P, the terminal device may determine a codebook corresponding to the DFT oversampling matrix, and further determine, in the codebook corresponding to the DFT oversampling matrix, the uplink precoding information of the P RB sets based on the second indication information.

For example, the implementation process includes the following.

(A) An $(n, m)^{th}$ element of a matrix Q meets the following: $Q(n, m) = e^{-j2\pi\frac{m}{ON}n}$ , where N = 4, O is an oversampling multiple, n = 0,1,2,3, and m = 0,1,..., ON - 1.
(B) Each column of the matrix Q corresponds to a rank 1 codebook.
(C) If the terminal device determines, in the second indication information based on the value of P, that a quantity of bits occupied by an RB set in the P RB sets is x, the terminal device calculates a quantity (that is, 2^x) of required codebooks based on "x" to change the oversampling multiple, and then selects column vectors and a combination thereof from the matrix Q as the first codebook.

In a possible implementation, the second indication information includes P pieces of information, the P pieces of information respectively indicate the uplink precoding information of the P RB sets, and different information in the P pieces of information occupies a same quantity of bits in the DCI. Specifically, after the terminal device determines the second indication information in the DCI based on the first indication information in step S403, the terminal device may equally divide the bits occupied by the second indication information into P pieces of information for interpretation, to determine the P pieces of information included in the second indication information, and determine, based on some or all of the P pieces of information, the uplink precoding information corresponding to the uplink resources carrying the uplink information.

It should be understood that the "value of P" may be implemented in a manner determined based on the third indication information, or may be implemented in a manner preconfigured on the terminal device. For example, the foregoing network device or another network device sends the "value of P" to the terminal device through a communication link or a carrier before step S403, or the "value of P" is defined (for example, a value of a parameter is clearly specified in a standard/protocol), or the "value of P" is written into the terminal device in advance. This is not limited herein.

Optionally, when different information in the P pieces of information occupies a same quantity of bits in the DCI, that is, when different information in the P pieces of information indicates a same total quantity of indexes of uplink precoding information, uplink precoding information of different RB sets in the P RB sets may be determined by using a same codebook. Therefore, the terminal device can determine uplink precoding information of different RB sets in the P RB sets in a same codebook based on the second indication information. This is easy to implement.

For example, a quantity of bits occupied by each of the P pieces of information may be determined by performing a mathematical operation on the quantity of bits occupied by the second indication information. For example, the mathematical operation may include rounding up, rounding down, averaging, or another manner. This is not limited herein.

In another possible implementation, the second indication information includes P pieces of information, the P pieces of information respectively indicate the uplink precoding information of the P RB sets, and at least two pieces of information in the P pieces of information occupy different quantities of bits in the DCI. Specifically, after the terminal device determines the second indication information in the DCI based on the first indication information in step S403, the terminal device may divide, based on quantities of bits occupied by different information in the P pieces of information, the bits occupied by the second indication information into P pieces of information, to determine the P pieces of information included in the second indication information, and determine, based on some or all of the P pieces of information, the uplink precoding information corresponding to the uplink resources carrying the uplink information.

Optionally, when at least two pieces of information in the P pieces of information occupy different quantities of bits in the DCI, that is, when different information in the P pieces of information may indicate different total quantities of indexes of uplink precoding information, uplink precoding information of at least two RB sets corresponding to the at least two pieces of information may be determined by using different codebooks. Therefore, the terminal device can determine uplink precoding information of different RB sets in the P RB sets in at least two different codebooks based on the second indication information, so that the network device flexibly selects different codebooks to indicate the uplink precoding information of the P RB sets.

In addition, when at least two pieces of information in the P pieces of information occupy different quantities of bits in the DCI, the network device can indicate the uplink precoding information without selecting a same codebook. Therefore, when the network device has configured, by using the first indication information, the quantity of bits occupied by the second indication information, that is, when the quantity of bits occupied by the second indication information remains unchanged, if the network device selects a codebook with a small quantity of indexes of uplink precoding information, uplink precoding information of an RB set may be indicated by using a small quantity of bits. Correspondingly, if the network device selects a codebook with a large quantity of indexes of uplink precoding information, uplink precoding information corresponding to a large quantity of indexes of uplink precoding information may be indicated by using a large quantity of bits.

S404: The terminal device sends the uplink information.

In this embodiment, the terminal device sends the uplink information in step S404, and correspondingly, the network device receives the uplink information in step S404.

Specifically, after the terminal device obtains the second indication information in step S403, and determines the uplink precoding information of the P RB sets based on the second indication information, the terminal device may send the uplink information based on the uplink precoding information of the P RB sets in step S404. It should be understood that, that the terminal device may send the uplink information based on the uplink precoding information of the P RB sets in step S404 includes: The terminal device performs precoding processing on a to-be-sent signal based on the uplink precoding information of the P RB sets to obtain the uplink information, and sends the uplink information in step S404.

Correspondingly, the network device may receive the uplink information based on the uplink precoding information of the P RB sets in step S404. It should be understood that, that the network device receives the uplink information based on the uplink precoding information of the P RB sets in step S404 includes: The network device receives the uplink information, where the uplink information is information obtained by performing precoding processing on to-be-sent information based on the uplink precoding information of the P RB sets.

In a possible implementation, the uplink information sent by the terminal device in step S404 is carried on some or all RBs in the P RB sets. Specifically, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information in step S404, the terminal device receives, from the network device, indication information indicating an uplink resource scheduled for the terminal device, so that the terminal device can send the uplink information in step S404 based on the uplink resource that is scheduled for the terminal device and that is indicated by the indication information.

Based on the foregoing technical solution, after the terminal device receives the first indication information indicating the quantity of bits occupied by the second indication information in step S401, in step S403, the terminal device determines, based on the quantity of bits, the second indication information in the DCI determined in step S402. The first indication information indicates the quantity of bits occupied by the second indication information, the second indication information indicates the uplink precoding information of the P RB sets, P is greater than or equal to 2, and different RB sets in the P RB sets correspond to different uplink precoding information. In other words, the network device may indicate two or more types of uplink precoding information to the terminal device based on the second indication information in the DCI. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the first indication information received by the terminal device in step S401 indicates the quantity of bits occupied by the second indication information. In other words, the terminal device may determine, based on the first indication information, the quantity of bits occupied by the second indication information indicating the uplink precoding information of the P RB sets. In this way, after receiving the DCI, the terminal device may determine the second indication information in the DCI based on the quantity of bits indicated by the first indication information, so that the terminal device can obtain an indicator of the uplink precoding information in the DCI without performing blind detection, to reduce energy consumption of the terminal device.

FIG. 5 is a diagram of a communication method according to this application. The method includes the following steps.

S501: A network device sends sixth indication information.

In this embodiment, the network device sends the sixth indication information in step S501, and correspondingly, a terminal device receives the sixth indication information in step S501. The sixth indication information indicates an RE occupied by a beamformed CSI-RS.

Specifically, each resource block RB set in P RB sets includes one or more RBs, different RB sets in the P RB sets correspond to different uplink precoding information, and P is greater than or equal to 2.

Optionally, the sixth indication information sent by the network device may be carried in an RRC message, a MAC CE message, a PDCCH message, or another message. This is not limited herein.

S502: The network device sends the beamformed CSI-RS.

In this embodiment, the network device sends the CSI-RS in step S502. Correspondingly, in step S502, the terminal device receives the CSI-RS based on the sixth indication information in step S501.

It should be understood that, that the sixth indication information indicates the RE occupied by the beamformed CSI-RS includes: The sixth indication information indicates a quantity of REs occupied by the beamformed CSI-RS, and/or the sixth indication information indicates a location of the RE occupied by the beamformed CSI-RS.

Specifically, the CSI-RS sent by the network device in step S502 may be used to carry an indicator of uplink precoding information of one or more terminal devices.

For example, when the CSI-RS sent by the network device in step S502 is used to carry an uplink precoding indicator of a terminal device, the sixth indication information sent by the network device in step S501 indicates the RE carrying the CSI-RS.

For another example, when the CSI-RS sent by the network device in step S502 is used to carry indicators of uplink precoding information of a plurality of terminal devices, if communication channels between the plurality of terminal devices and the network device are the same or similar, the sixth indication information sent by the network device in step S501 indicates the RE carrying the CSI-RS, and different terminal devices may obtain a same uplink precoding indicator based on the CSI-RS.

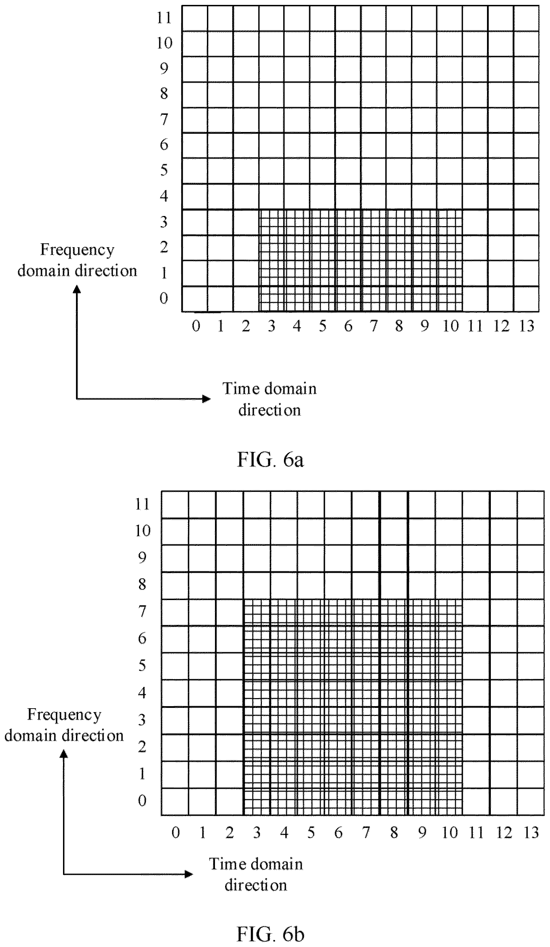

For another example, when the CSI-RS sent by the network device in step S502 is used to carry indicators of uplink precoding information of a plurality of terminal devices, the sixth indication information sent by the network device in step S501 may indicate, to different terminal devices, the RE carrying the CSI-RS, and different terminal devices obtain respective uplink precoding indicators. In other words, a frequency domain resource occupied by the CSI-RS is divided into a plurality of frequency domain resources, and the plurality of frequency domain resources respectively correspond to a plurality of terminals. The network device may separately send different sixth indication information to different terminal devices in step S501, so that the terminal device obtains a respective uplink precoding indicator based on the sixth indication information in step S502. The following describes this implementation with reference to examples shown in FIG. 6a and FIG. 6b.

For example, as shown in FIG. 6a, the sixth indication information sent by the network device to the terminal device in step S501 indicates 32 REs. The 32 REs correspond to time domain indexes "3 to 10" and frequency domain indexes "0 to 3" in the figure.

For another example, as shown in FIG. 6b, the sixth indication information sent by the network device to the terminal device in step S501 indicates 64 REs. The 64 REs correspond to time domain indexes "3 to 10" and frequency domain indexes "0 to 7" in the figure.

It should be understood that, in the foregoing implementation example, an example in which the sixth indication information indicates a plurality of REs, and the plurality of REs are consecutive in frequency domain and consecutive in time domain is used for description. In an actual application, when indicating a plurality of REs, the sixth indication information may also indicate a plurality of inconsecutive REs, or partially consecutive and partially inconsecutive REs. This is not limited herein.

S503: The terminal device performs channel measurement based on the beamformed CSI-RS to obtain uplink precoding information of the P RB sets.

In this embodiment, after the terminal device receives the CSI-RS in step S502, in step S503, the terminal device performs channel measurement based on the beamformed CSI-RS to obtain the uplink precoding information of the P RB sets. Each RB set in the P RB sets includes one or more RBs, different RB sets in the P RB sets correspond to different uplink precoding information, and P is greater than or equal to 2.

For example, before the network device sends the CSI-RS in step S502, the network device first needs to determine the uplink precoding information of the terminal device in the P RB sets. As shown in step S502, the CSI-RS sent by the network device in step S502 may be used to carry an indicator of uplink precoding information of one or more terminal devices. Herein, a quantity of the one or more terminal devices is k, and k is greater than or equal to 1.

For the terminal device k, an uplink precoding vector of an $m^{th}$ RB set of the terminal device is denoted as $P_{k,m}^{UL}$, where $m \in \{1,...,P\}$, and "UL" represents uplink (uplink). It is assumed that the first indication information indicates that the RE configured for the uplink precoding vector $P_{k,m}^{UL}$ of the $m^{th}$ RB set indicated by the terminal device k is an RE n, and downlink channel information of the terminal device k on the RE n is denoted as $H_{k,n}^{DL}$. The network device calculates a downlink precoding vector required for sending the CSI-RS on the RE n to the terminal device k to indicate the uplink precoding vector $P_{k,m}^{UL}$ of the $m^{th}$ RB set, where the downlink precoding vector is denoted as $P_{k,m,n}^{DL}$, and $P_{k,m,n}^{DL}$ meets the following:

$$H_{k,n}^{DL} * P_{k,m,n}^{DL} = P_{k,m}^{UL} \quad \text{Formula (1)}$$

The network device multiplies the calculated $P_{k,m,n}^{DL}$ by the CSI-RS, to obtain the beamformed CSI-RS, and then sends the CSI-RS to the terminal device through the downlink channel Hk n in step S503.

Then, a signal received by the terminal device k in step S503 is denoted as $y_{k,m}$, and $y_{k,m}$ meets the following:

$$y_{k,m} = H_{k,n}^{DL} * P_{k,m,n}^{DL} * CSI\text{-}RS + N_{k,m} \quad \text{Formula (2)}$$

Herein, $N_{k,m}$ is receive noise. The terminal device k may determine $"H_{k,n}^{DL} * P_{k,m,n}^{DL}"$ based on received information of the CSI-RS and the signal $y_{k,m}$ and according to Formula (2), and may further determine the uplink precoding information of the $m^{th}$ RB set according to Formula (1).

In a possible implementation, when there is an RB set including a plurality of RBs in the P RB sets, the plurality of RBs in the RB set have same uplink precoding information. Specifically, in RBs included in the P RB sets, different RBs may correspond to same or similar channel information, so that the network device can configure a same uplink precoding indicator for the different RBs, and configure the different RBs in a same RB set. In other words, when there is an RB set including a plurality of RBs in the P RB sets, the plurality of RBs in the RB set have same uplink precoding information.

In a possible implementation, the terminal device may obtain the uplink precoding information of the P RB sets by performing channel measurement based on the CSI in step S503. RBs included in the P RB sets may be implemented in a plurality of manners. The following provides a further description with reference to some implementation examples.

Implementation 1: The RBs included in the P RB sets are uplink resources scheduled for the terminal device.

In a possible implementation, the RBs included in the P RB sets are RBs corresponding to the uplink resources scheduled for the terminal device. In other words, the uplink precoding indicator (namely, information carried in the CSI-RS) sent by the network device to the terminal device indicates uplink precoding information corresponding to the uplink resources scheduled for the terminal device. In other words, that the terminal device sends uplink information based on the uplink precoding information of the P RB sets includes: The terminal device sends, based on the uplink precoding information of the P RB sets, the uplink information on the uplink resources (namely, all RBs included in the P RB sets) scheduled for the terminal device. Therefore, the network device does not need to indicate, to the terminal device, uplink precoding information corresponding to an uplink resource that is not scheduled for the terminal device, and the terminal device does not need to read the uplink precoding information corresponding to the uplink resource that is not scheduled for the terminal device, to reduce signaling overheads and reduce energy consumption of the terminal device.

For example, in Implementation 1, the RBs included in the P RB sets may be the uplink resources scheduled for the terminal device. Implementation 1 is described herein as an example with reference to the scenario example shown in FIG. 3b or FIG. 3c. The RBs included in the P RB sets may be RBs that are in the 10 RBs corresponding to the uplink BWP and that are scheduled for the terminal device to use. In other words, the RBs included in the P RB sets are "the RB 1, the RB 2, the RB 3, the RB 4, the RB 6, the RB 8, the RB 9, and the RB 10, which are eight RBs in total" shown in FIG. 3b; or the RBs included in the P RB sets are "the RB 2, the RB 3, the RB 8, and the RB 9, which are four RBs in total" shown in FIG. 3c.

Optionally, in Implementation 1, the method further includes: The terminal device receives seventh indication information, where the seventh indication information indicates that each RB set in the P RB sets includes one or more RBs in the uplink resources scheduled for the terminal device.

Optionally, the seventh indication information sent by the network device may be carried in an RRC message, a MAC CE message, a PDCCH message, or another message. This is not limited herein.

It should be noted that the terminal device may receive the seventh indication information in any process before step S504. For example, the terminal device may receive the seventh indication information after (or before) step S503, the terminal device may receive the seventh indication information after (or before) step S502, or the terminal device may receive the seventh indication information after (or before) step S501. This is not limited herein.

Specifically, when the RBs included in the P RB sets are the uplink resources scheduled for the terminal device, that is, when all the RBs in the P RB sets are located in the uplink resources scheduled for the terminal device, the seventh indication information indicates an association relationship between an RB in the P RB sets and an RB in the uplink resources scheduled for the terminal device. In this way, the terminal device can determine, based on the association relationship and the uplink precoding information of the P RB sets, the uplink precoding information corresponding to the uplink resources scheduled for the terminal device, and further send the uplink information on the uplink resources scheduled for the terminal device.

Optionally, the seventh indication information includes a value of P or a quantity of RBs included in each RB set. Specifically, when the RBs included in the P RB sets are the uplink resources scheduled for the terminal device, that is, when all the RBs in the P RB sets are located in the uplink resources scheduled for the terminal device, different RB sets in the P RB sets may include a same quantity of RBs. Correspondingly, the seventh indication information sent by the network device may include the value of P, so that the terminal device determines, based on the value of P, RBs included in each RB set in the P RB sets. Alternatively, the seventh indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the corresponding uplink precoding information.

Optionally, different RB sets in the P RB sets may not necessarily include a same quantity of RBs. In other words, at least two RB sets in the P RB sets include different quantities of RBs.

For example, the implementation scenario shown in FIG. 3b is still used as an example for further description herein. The RBs included in the P RB sets are the uplink resources scheduled for the terminal device. In other words, the RBs included in the P RB sets are "the RB 1, the RB 2, the RB 3, the RB 4, the RB 6, the RB 8, the RB 9, and the RB 10, which are eight RBs in total" shown in FIG. 3b.

In the example shown in FIG. 3b, the terminal device determines, based on the obtained seventh indication information, RBs included in different RB sets in the P RB sets. In other words, the terminal device determines, based on the seventh indication information, that RBs included in a first RB set in the P RB sets are one or more RBs in the "eight RBs" shown in FIG. 3b, and RBs included in a second RB set in the P RB sets are one or more RBs in the "eight RBs" shown in FIG. 3b, .... By analogy, the terminal device may determine, based on the seventh indication information, RBs included in different RBs in the P RB sets.

In an implementation, if different RB sets in the P RB sets include a same quantity of RBs, the seventh indication information may indicate, to the terminal device by using an RB index, RBs included in different RB sets in the P RB sets.

Optionally, RB indexes included in different RB sets in the P RB sets may continue to be RB indexes used by the uplink BWP. In this case, an example in which each RB set in the P RB sets includes two RBs is used. In the scenario shown in FIG. 3b, an indication manner of the seventh indication information sent by the network device may be as follows:

RBs included in a first RB set are "the RB 1 and the RB 2";

RBs included in a second RB set are "the RB 3 and the RB 4";
RBs included in a third RB set are "the RB 6 and the RB 8"; and
RBs included in a fourth RB set are "the RB 9 and the RB 10".

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order. In this case, the example in which each RB set in the P RB sets includes two RBs is still used herein.

In the scenario shown in FIG. 3b, if the eight RBs included in the P RB sets are sorted in ascending order, RB indexes of frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are inconsecutive because "the RB 5 and the RB 7" are missing. After the "eight RBs" are reordered, "the RB 1, the RB 2, the RB 3, the RB 4, the RB 5, the RB 6, the RB 7, and the RB 8, which are eight RBs in total" may be obtained. In this case, an indication manner of the seventh indication information sent by the network device may be as follows:

RBs included in a first RB set are "the RB 1 and the RB 2";
RBs included in a second RB set are "the RB 3 and the RB 4";
RBs included in a third RB set are "the RB 5 and the RB 6"; and
RBs included in a fourth RB set are "the RB 7 and the RB 8".

In the scenario shown in FIG. 3b, if the eight RBs included in the P RB sets are sorted in descending order, after frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are reordered, "the RB 8, the RB 7, the RB 6, the RB 5, the RB 4, the RB 3, the RB 2, and the RB 1, which are eight RBs in total" may be obtained. In this case, an indication manner of the seventh indication information sent by the network device may be as follows:

RBs included in a first RB set are "the RB 8 and the RB 7";
RBs included in a second RB set are "the RB 6 and the RB 5";
RBs included in a third RB set are "the RB 4 and the RB 3"; and
RBs included in a fourth RB set are "the RB 2 and the RB 1".

In another implementation, if different RB sets in the P RB sets may not necessarily include a same quantity of RBs, when at least two RB sets in the P RB sets include different quantities of RBs, the seventh indication information may indicate, to the terminal device by using an RB index, RBs included in different RB sets in the P RB sets. The following use an example in which each segment of adjacent consecutive RBs are used as different RBs in the P RB sets for description.

Optionally, RB indexes included in different RB sets in the P RB sets may continue to be RB indexes used by the uplink BWP. In this case, in the scenario shown in FIG. 3b, an indication manner of the seventh indication information sent by the network device may be as follows:

RBs included in a first RB set are "the RB 1, the RB 2, the RB 3, and the RB 4";
an RB included in a second RB set is "the RB 6"; and
RBs included in a third RB set are "the RB 8, the RB 9, and the RB 10".

Optionally, when the RBs included in the P RB sets are the uplink resources scheduled for the terminal device, that is, when all the RBs in the P RB sets are located in the uplink resources scheduled for the terminal device, the uplink resources scheduled for the terminal device may not be consecutive uplink resources in frequency domain. In other words, RB indexes of RBs corresponding to the uplink resources scheduled for the terminal device in the uplink BWP may be inconsecutive. In other words, in this implementation, when there is an RB set including a plurality of RBs in the P RB sets, RB indexes of the plurality of RBs in the uplink BWP may be inconsecutive. In this case, the terminal device may reorder the RBs included in the uplink resources scheduled for the terminal device, to obtain RB indexes in ascending or descending order, so that when there is an RB set including a plurality of RBs in the P RB sets, RB indexes of the plurality of RBs are consecutive in the RB indexes in ascending or descending order. In this case, the example in which each RB set in the P RB sets includes two RBs is still used herein.

In the scenario shown in FIG. 3b, if the eight RBs included in the P RB sets are sorted in ascending order, RB indexes of frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are inconsecutive because "the RB 5 and the RB 7" are missing. After the "eight RBs" are reordered, "the RB 1, the RB 2, the RB 3, the RB 4, the RB 5, the RB 6, the RB 7, and the RB 8, which are eight RBs in total" may be obtained. In this case, an indication manner of the seventh indication information sent by the network device may be as follows:

RBs included in a first RB set are "the RB 1, the RB 2, the RB 3, and the RB 4";
an RB included in a second RB set is "the RB 5"; and
RBs included in a third RB set are "the RB 6, the RB 7, and the RB 8".

In the scenario shown in FIG. 3b, if the eight RBs included in the P RB sets are sorted in descending order, after frequency domain resources "the RB 1, the RB 2, the RB 3, the RB 4, the RB 6, the RB 8, the RB 9, and the RB 10, which are eight RBs in total" scheduled for the terminal device in the uplink BWP shown in FIG. 3b are reordered, "the RB 8, the RB 7, the RB 6, the RB 5, the RB 4, the RB 3, the RB 2, and the RB 1, which are eight RBs in total" may be obtained. In this case, an indication manner of the seventh indication information sent by the network device may be as follows:

RBs included in a first RB set are "the RB 8, the RB 7, the RB 6, and the RB 5";
an RB included in a second RB set is "the RB 4"; and
RBs included in a third RB set are "the RB 3, the RB 2, and the RB 1".

It should be noted that the foregoing example is merely an example for description. The network device may use, based on an actual channel status, RBs with a same channel or similar channels in the uplink resources scheduled for the terminal device (for example, "the RB 1, the RB 2, the RB 3, the RB 4, the RB 6, the RB 8, the RB 9, and the RB 10, which are eight RBs in total in FIG. 3b" or "the RB 2, the RB 3, the RB 8, and the RB 9, which are four RBs in total in FIG. 3c) as a same RB set, to determine RBs included in each RB set in the P RB sets, and indicate the RBs to the terminal device by using the seventh indication information.

It should be understood that, in the foregoing implementation example related to index sorting, an example in which a number "1" is used as a start of an index is used for description. In an actual application, another number may be used as a start of an index, for example, "0", "2", or another value. This is not limited herein.

Implementation 2: RBs included in the P RB sets are frequency domain resources corresponding to an uplink bandwidth part (bandwidth part, BWP) of the terminal device.

In a possible implementation, the RBs included in the P RB sets are the frequency domain resources corresponding to the uplink BWP of the terminal device. In other words, the uplink precoding indicator (namely, information carried in the CSI-RS) sent by the network device to the terminal device indicates uplink precoding information corresponding to the frequency domain resources corresponding to the uplink BWP of the terminal device. In other words, that the terminal device sends uplink information based on the uplink precoding information of the P RB sets includes: After determining, based on the uplink precoding information of the P RB sets, the uplink precoding information corresponding to the uplink resources scheduled for the terminal device, the terminal device sends, based on the uplink precoding information corresponding to the uplink resources scheduled for the terminal device, the uplink information on the uplink resources (namely, some RBs included in the P RB sets) scheduled for the terminal device. In this way, the network device can indicate different uplink precoding information of different RB sets in the uplink BWP to the terminal device, to avoid a performance loss to an extent, and improve communication efficiency.

For example, in Implementation 2, the RBs included in the PRB sets may be the uplink resources scheduled for the terminal device. Implementation 2 is described herein as an example with reference to the scenario example shown in FIG. 3a. The RBs included in the P RB sets may be RBs that are in the 10 RBs corresponding to the uplink BWP and that are scheduled for the terminal device to use. In other words, the RBs included in the P RB sets are "the RB 1 to the RB 10, which are 10 RBs in total" shown in FIG. 3a.

Optionally, in Implementation 2, the method may further include: The terminal device receives eighth indication information, where the eighth indication information indicates that each RB set in the P RB sets includes one or more RBs in the frequency domain resources corresponding to the uplink BWP of the terminal device.

Optionally, the eighth indication information sent by the network device may be carried in an RRC message, a MAC CE message, a PDCCH message, or another message. This is not limited herein.

It should be noted that the terminal device may receive the eighth indication information in any process before step S504. For example, the terminal device may receive the eighth indication information after (or before) step S503, the terminal device may receive the eighth indication information after (or before) step S502, or the terminal device may receive the eighth indication information after (or before) step S501. This is not limited herein.

Specifically, when the RBs included in the P RB sets are the frequency domain resources corresponding to the uplink BWP, that is, when all the RBs in the P RB sets are located in the frequency domain resources corresponding to the uplink BWP, the eighth indication information indicates an association relationship between an RB in the P RB sets and an RB in the frequency domain resources corresponding to the uplink BWP. In this way, the terminal device can determine, based on the association relationship and the uplink precoding information of the P RB sets, the uplink precoding information corresponding to the uplink resources scheduled for the terminal device in the frequency domain resources corresponding to the uplink BWP, and further send the uplink information on the uplink resources scheduled for the terminal device.

Optionally, the eighth indication information includes a value of P or a quantity of RBs included in each RB set. Specifically, when the RBs included in the P RB sets are the frequency domain resources corresponding to the uplink BWP, that is, when all the RBs in the P RB sets are located in the frequency domain resources corresponding to the uplink BWP, different RB sets in the P RB sets may include a same quantity of RBs. Correspondingly, the eighth indication information sent by the network device may include the value of P, so that the terminal device determines, based on the value of P, RBs included in each RB set in the P RB sets. Alternatively, the eighth indication information sent by the network device may include a quantity of RBs included in each RB set in the P RB sets, so that the terminal device determines, based on the quantity of RBs included in each RB set in the P RB sets, the RBs included in each RB set in the P RB sets. In this way, the terminal device can send the uplink information based on the determined RBs included in each RB set in the P RB sets and the uplink precoding information of the uplink resources scheduled for the terminal device.

Optionally, different RB sets in the P RB sets may not necessarily include a same quantity of RBs. In other words, at least two RB sets in the P RB sets include different quantities of RBs.

For example, the implementation scenario shown in FIG. 3a is still used as an example for further description herein. The RBs included in the P RB sets are the frequency domain resources corresponding to the uplink BWP. In other words, the RBs included in the P RB sets are "the RB 1 to the RB 10, which are 10 RBs in total" shown in FIG. 3a.

In the example shown in FIG. 3a, the terminal device determines, based on the obtained fourth indication information, RBs included in different RB sets in the P RB sets. In other words, the terminal device determines, based on the fourth indication information, that RBs included in a first RB set in the P RB sets are one or more RBs in the "10 RBs" shown in FIG. 3a, and RBs included in a second RB set in the P RB sets are one or more RBs in the " 10 RBs" shown in FIG. 3a, .... By analogy, the terminal device may determine, based on the fourth indication information, RBs included in different RBs in the P RB sets.

In an implementation, if different RB sets in the P RB sets include a same quantity of RBs, the fourth indication information may indicate, to the terminal device by using an RB index, RBs included in different RB sets in the P RB sets. When all the RBs in the P RB sets are located in the frequency domain resources corresponding to the uplink BWP, and there is an RB set including a plurality of RBs in the P RB sets, RB indexes of the plurality of RBs are consecutive in the frequency domain resources corresponding to the uplink BWP. In other words, the terminal device determines an order of RBs included in the frequency domain resources corresponding to the uplink BWP, to obtain RB indexes in ascending or descending order. When there is an RB set including a plurality of RBs in the P RB sets, RB indexes of the plurality of RBs are consecutive in the RB indexes in ascending or descending order.

Optionally, in this case, an example in which each RB set in the P RB sets includes two RBs is used. If RB indexes are consecutive in RB indexes in ascending order, in the scenario shown in FIG. 3a, an indication manner of the third indication information sent by the network device may be as follows:

RBs included in a first RB set are "the RB 1 and the RB 2";
RBs included in a second RB set are "the RB 3 and the RB 4";
RBs included in a third RB set are "the RB 5 and the RB 6";
RBs included in a fourth RB set are "the RB 7 and the RB 8"; and
RBs included in a fifth RB set are "the RB 9 and the RB 10".

Optionally, in this case, an example in which each RB set in the P RB sets includes two RBs is used. If RB indexes are consecutive in RB indexes in descending order, in the scenario shown in FIG. 3a, an indication manner of the third indication information sent by the network device may be as follows:

RBs included in a first RB set are "the RB 10 and the RB 9";
RBs included in a second RB set are "the RB 8 and the RB 7";
RBs included in a third RB set are "the RB 6 and the RB 5";

RBs included in a fourth RB set are "the RB 4 and the RB 3"; and
RBs included in a fifth RB set are "the RB 2 and the RB 1".

In another implementation, if different RB sets in the P RB sets may not necessarily include a same quantity of RBs, when at least two RB sets in the P RB sets include different quantities of RBs, the fourth indication information may indicate, to the terminal device by using an RB index, RBs included in different RB sets in the P RB sets. The following use an example in which each segment of adjacent consecutive RBs are used as different RBs in the P RB sets for description.

Optionally, in the scenario shown in FIG. 3a, an indication manner of the fourth indication information sent by the network device may be as follows:

RBs included in a first RB set are "the RB 1, the RB 2, the RB 3, the RB 4, and the RB 5";
RBs included in a second RB set are "the RB 6 and the RB 7"; and
RBs included in a third RB set are "the RB 8, the RB 9, and the RB 10".

It should be noted that the foregoing example is merely an example for description. The network device may use, based on an actual channel status, RBs with a same channel or similar channels in the frequency domain resources corresponding to the uplink BWP (for example, "the RB 1 to the RB 10 in FIG. 3a) as a same RB set, to determine RBs included in each RB set in the P RB sets, and indicate the RBs to the terminal device by using the fourth indication information.

It should be understood that, in the foregoing implementation example related to index sorting, an example in which a number "1" is used as a start of an index is used for description. In an actual application, another number may be used as a start of an index, for example, "0", "2", or another value. This is not limited herein.

In a possible implementation, resource elements REs occupied by the beamformed CSI-RS include P groups of REs, the P groups of REs are respectively used to determine the uplink precoding information of the P RB sets, and different groups in the P groups of REs occupy a same quantity of REs. Specifically, after the terminal device receives the CSI-RS based on the sixth indication information, the terminal device may equally divide the REs occupied by the CSI-RS into the P groups of REs, and determine, based on information carried by some REs or information carried by all REs in the P groups of REs, the uplink precoding information corresponding to the uplink resource carrying the uplink information.

In a possible implementation, resource elements REs occupied by the beamformed CSI-RS include P groups of REs, the P groups of REs are respectively used to determine the uplink precoding information of the P RB sets, and at least two groups of REs in the P groups of REs occupy different quantities of REs. Specifically, after the terminal device receives the CSI-RS based on the sixth indication information, the terminal device may divide, based on quantities of REs in different groups in the P groups of REs, the REs occupied by the CSI-RS into the P groups of REs, and determine, based on information carried by some REs or information carried by all REs in the P groups of REs, the uplink precoding information corresponding to the uplink resource carrying the uplink information.

S504: The terminal device sends the uplink information.

In this embodiment, the terminal device sends the uplink information in step S504, and correspondingly, the network device receives the uplink information in step S504.

Specifically, after the terminal device obtains the uplink precoding information of the P RB sets in step S503, the terminal device may send the uplink information based on the uplink precoding information of the P RB sets in step S504. It should be understood that, that the terminal device sends the uplink information based on the uplink precoding information of the P RB sets in step S504 includes: The terminal device performs precoding processing on a to-be-sent signal based on the uplink precoding information of the P RB sets to obtain the uplink information, and sends the uplink information in step S504.

Correspondingly, the network device may receive the uplink information based on the uplink precoding information of the P RB sets in step S504. It should be understood that, that the network device receives the uplink information based on the uplink precoding information of the P RB sets in step S504 includes: The network device receives the uplink information, where the uplink information is information obtained by performing precoding processing on to-be-sent information based on the uplink precoding information of the P RB sets.

In a possible implementation, the uplink information is carried on some or all RBs in the P RB sets.

Based on the foregoing technical solution, the network device may schedule, for the terminal device, some or all RBs included in the P RB sets. Correspondingly, uplink resources carried in the uplink information sent by the terminal device may include some or all RBs in the P RB sets.

Optionally, before the terminal device sends the uplink information in step S504, the terminal device receives, from the network device, indication information indicating an uplink resource scheduled for the terminal device, so that the terminal device can send the uplink information in step S504 based on the uplink resource that is scheduled for the terminal device and that is indicated by the indication information.

Based on the foregoing technical solution, after the terminal device receives the sixth indication information indicating the RE occupied by the beamformed CSI-RS in step S501, the terminal device receives the CSI-RS based on the sixth indication information in step S502. Then, the terminal device performs channel measurement based on the CSI-RS in step S503, to obtain the uplink precoding information of the P RB sets. P is greater than or equal to 2, and different RB sets in the P RB sets correspond to different uplink precoding information. In other words, the network device may indicate two or more types of uplink precoding information to the terminal device based on the CSI-RS, to implement high-precision uplink precoding indication. Compared with an implementation in which the network device indicates same uplink precoding information, this implementation enables the network device to indicate different uplink precoding information of different RB sets to the terminal device, to avoid a performance loss to an extent, and improve communication efficiency.

In addition, the sixth indication information received by the terminal device indicates the RE occupied by the beamformed CSI-RS. In other words, the terminal device may determine, based on the sixth indication information, the RE occupied by the CSI-RS indicating the uplink precoding information of the P RB sets. In this way, the terminal device receives the CSI-RS based on the sixth indication information, to prevent the terminal device from obtaining incorrect uplink precoding information.

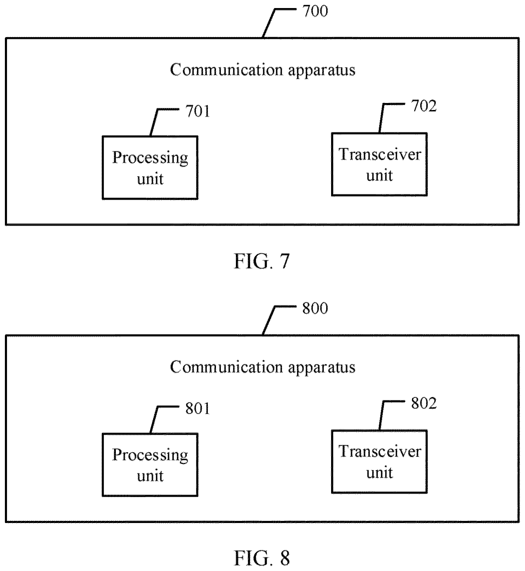

Refer to FIG. 7. An embodiment of this application provides a communication apparatus. The communication apparatus 700 can implement functions of the terminal device in the foregoing method embodiments, and therefore can also implement beneficial effects of the foregoing method embodiments.

When the communication apparatus 700 is configured to implement the embodiment shown in FIG. 4 and any optional embodiment thereof, a processing unit 701 and a transceiver unit 702 included in the communication apparatus 700 are configured to perform the following implementation process.

The transceiver unit 702 is configured to receive first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2.

The transceiver unit 702 is further configured to receive DCI.

The processing unit 701 is configured to determine the second indication information in the DCI based on the quantity of bits.

The transceiver unit 702 is further configured to send uplink information based on the uplink precoding information of the P RB sets.

In a possible implementation, when there is an RB set including a plurality of RBs in the P RB sets, the plurality of RBs in the RB set have same uplink precoding information.

In a possible implementation, the uplink information is carried on some or all RBs in the P RB sets.

In a possible implementation, RBs included in the P RB sets are uplink resources scheduled for the terminal device.

In a possible implementation,
the transceiver unit 702 is further configured to receive third indication information, where the third indication information indicates that each RB set in the P RB sets includes one or more RBs in the uplink resources scheduled for the terminal device.

In a possible implementation,
the third indication information includes a value of P or a quantity of RBs included in each RB set.

In a possible implementation, RBs included in the P RB sets are frequency domain resources corresponding to an uplink BWP of the terminal device.

In a possible implementation,
the transceiver unit 702 is further configured to receive fourth indication information, where the fourth indication information indicates that each RB set in the P RB sets includes one or more RBs in the frequency domain resources corresponding to the uplink BWP of the terminal device.

In a possible implementation,
the fourth indication information includes a value of P or a quantity of RBs included in each RB set.

In a possible implementation, the uplink precoding information of the P RB sets is determined based on a first codebook, and the first codebook is any one of the following:

a preconfigured codebook;
a codebook determined in at least two codebooks based on the value of P; or
a codebook corresponding to a DFT oversampling matrix generated based on the value of P.

In a possible implementation, the uplink precoding information of the P RB sets is determined based on a first codebook.

The transceiver unit 702 is further configured to receive fifth indication information, where the fifth indication information indicates that the first codebook is any one of the following:

a preconfigured codebook;
a codebook determined in at least two codebooks based on the value of P; or
a codebook corresponding to a DFT oversampling matrix generated based on the value of P.

In a possible implementation, when there is an RB set including a plurality of RBs in the P RB sets, RB indexes of the plurality of RBs are consecutive.

In a possible implementation, each RB set in the P RB sets includes a same quantity of RBs.

In a possible implementation,
the second indication information includes P pieces of information, the P pieces of information respectively indicate the uplink precoding information of the P RB sets, and different information in the P pieces of information occupies a same quantity of bits in the DCI.

Alternatively, the second indication information includes P pieces of information, the P pieces of information respectively indicate the uplink precoding information of the P RB sets, and at least two pieces of information in the P pieces of information occupy different quantities of bits in the DCI.

When the communication apparatus 700 is configured to implement the embodiment shown in FIG. 5 and any optional embodiment thereof, the processing unit 701 and the transceiver unit 702 included in the communication apparatus 700 are configured to perform the following implementation process.

The transceiver unit 702 is configured to receive sixth indication information, where the sixth indication information indicates a resource element RE occupied by a beamformed CSI-RS.

The transceiver unit 702 is further configured to receive the CSI-RS based on the sixth indication information.

The processing unit 701 is configured to perform channel measurement based on the CSI-RS, to obtain uplink precoding information of P RB sets, where each RB set in the P RB sets includes one or more RBs, different RB sets in the P RB sets correspond to different uplink precoding information, and P is greater than or equal to 2.

The transceiver unit 702 is further configured to send uplink information based on the uplink precoding information of the P RB sets.

In a possible implementation, when there is an RB set including a plurality of RBs in the P RB sets, the plurality of RBs in the RB set have same uplink precoding information.

In a possible implementation, the uplink information is carried on some or all RBs in the P RB sets.

In a possible implementation, RBs included in the P RB sets are uplink resources scheduled for the terminal device.

In a possible implementation, the transceiver unit 702 is further configured to receive seventh indication information, where the seventh indication information indicates that each RB set in the P RB sets includes one or more RBs in the uplink resources scheduled for the terminal device.

In a possible implementation,
the seventh indication information includes a value of P or a quantity of RBs included in each RB set.

In a possible implementation, RBs included in the P RB sets are frequency domain resources corresponding to an uplink BWP of the terminal device.

In a possible implementation, the transceiver unit 702 is further configured to receive eighth indication information, where the eighth indication information indicates that each RB set in the P RB sets includes one or more RBs in the frequency domain resources corresponding to the uplink BWP of the terminal device.

In a possible implementation,
the eighth indication information includes a value of P or a quantity of RBs included in each RB set.

In a possible implementation, when there is an RB set including a plurality of RBs in the P RB sets, RB indexes of the plurality of RBs are consecutive.

In a possible implementation, each RB set in the P RB sets includes a same quantity of RBs.

In a possible implementation,
resource elements REs occupied by the beamformed CSI-RS include P groups of REs, the P groups of REs are respectively used to determine the uplink precoding information of the P RB sets, and different groups in the P groups of REs occupy a same quantity of REs.

Alternatively, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

It should be noted that for specific content such as an information execution process of the units of the communication apparatus 700, refer to descriptions in the foregoing method embodiments of this application. Details are not described herein again.

Refer to FIG. 8. An embodiment of this application provides a communication apparatus. The communication apparatus 800 can implement functions of the network device in the foregoing method embodiments, and therefore can also implement beneficial effects of the foregoing method embodiments.

When the communication apparatus 800 is configured to implement the embodiment shown in FIG. 4 and any optional embodiment thereof, a processing unit 801 and a transceiver unit 802 included in the communication apparatus 800 are configured to perform the following implementation process.

The processing unit 801 is configured to determine first indication information, where the first indication information indicates a quantity of bits occupied by second indication information, the second indication information indicates uplink precoding information of P RB sets, each resource block RB set in the P RB sets includes one or more RBs, different RB sets in the P RB sets correspond to different uplink precoding information, and P is greater than or equal to 2.

The transceiver unit 802 is configured to send the first indication information.

The transceiver unit is further configured to send DCI, where the DCI includes the second indication information.

The transceiver unit 802 is further configured to receive uplink information based on the uplink precoding information of the P RB sets.

In a possible implementation, RBs included in the P RB sets are uplink resources scheduled for a terminal device.

In a possible implementation,
the processing unit 801 is further configured to determine third indication information, where the third indication information indicates that each RB set in the P RB sets includes one or more RBs in the uplink resources scheduled for the terminal device.

The transceiver unit 802 is further configured to send the third indication information.

In a possible implementation,
the third indication information includes a value of P or a quantity of RBs included in each RB set.

In a possible implementation, RBs included in the P RB sets are frequency domain resources corresponding to an uplink BWP of the terminal device.

In a possible implementation,
the processing unit 801 is further configured to determine fourth indication information, where the fourth indication information indicates that each RB set in the P RB sets includes one or more RBs in the frequency domain resources corresponding to the uplink BWP of the terminal device.

The transceiver unit 802 is further configured to send the fourth indication information.

In a possible implementation,
the fourth indication information includes a value of P or a quantity of RBs included in each RB set.

In a possible implementation, the uplink precoding information of the P RB sets is determined based on a first codebook.

The processing unit 801 is further configured to determine fifth indication information, where the fifth indication information indicates that the first codebook is any one of the following:

a preconfigured codebook;
a codebook determined in at least two codebooks based on the value of P; or
a codebook corresponding to a DFT oversampling matrix generated based on the value of P.

The transceiver unit 802 is further configured to send the fifth indication information.

In a possible implementation, when there is an RB set including a plurality of RBs in the P RB sets, RB indexes of the plurality of RBs are consecutive.

In a possible implementation, each RB set in the P RB sets includes a same quantity of RBs.

In a possible implementation,
the second indication information includes P pieces of information, the P pieces of information respectively indicate the uplink precoding information of the P RB sets, and different information in the P pieces of information occupies a same quantity of bits in the DCI.

Alternatively, the second indication information includes P pieces of information, the P pieces of information respectively indicate the uplink precoding information of the P RB sets, and at least two pieces of information in the P pieces of information occupy different quantities of bits in the DCI.

When the communication apparatus 800 is configured to implement the embodiment shown in FIG. 5 and any optional embodiment thereof, the processing unit 801 and the transceiver unit 802 included in the communication apparatus 800 are configured to perform the following implementation process.

The processing unit 801 is configured to determine sixth indication information, where the sixth indication information indicates a resource element RE occupied by a beamformed CSI-RS.

The transceiver unit 802 is configured to send the sixth indication information.

The processing unit 801 is further configured to determine the CSI-RS, where the CSI-RS is used to perform channel measurement to obtain uplink precoding information of P RB sets, each RB set in the P RB sets includes one or more RBs, different RB sets in the P RB sets correspond to different uplink precoding information, and P is greater than or equal to 2.

The transceiver unit 802 is further configured to send the CSI-RS.

The transceiver unit 802 is further configured to receive uplink information based on the uplink precoding information of the P RB sets.

In a possible implementation, when there is an RB set including a plurality of RBs in the P RB sets, the plurality of RBs in the RB set have same uplink precoding information.

In a possible implementation, the uplink information is carried on some or all RBs in the P RB sets.

In a possible implementation, RBs included in the P RB sets are uplink resources scheduled for a terminal device.

In a possible implementation, the transceiver unit 802 is further configured to send seventh indication information, where the seventh indication information indicates that each RB set in the P RB sets includes one or more RBs in the uplink resources scheduled for the terminal device.

In a possible implementation,
the seventh indication information includes a value of P or a quantity of RBs included in each RB set.

In a possible implementation, RBs included in the P RB sets are frequency domain resources corresponding to an uplink BWP of the terminal device.

In a possible implementation, the transceiver unit 802 is further configured to send eighth indication information, where the eighth indication information indicates that each RB set in the P RB sets includes one or more RBs in the frequency domain resources corresponding to the uplink BWP of the terminal device.

In a possible implementation,
the eighth indication information includes a value of P or a quantity of RBs included in each RB set.

In a possible implementation, when there is an RB set including a plurality of RBs in the P RB sets, RB indexes of the plurality of RBs are consecutive.

In a possible implementation, each RB set in the P RB sets includes a same quantity of RBs.

In a possible implementation,
resource elements REs occupied by the beamformed CSI-RS include P groups of REs, the P groups of REs are respectively used to determine the uplink precoding information of the P RB sets, and different groups in the P groups of REs occupy a same quantity of REs.

Alternatively, resource elements REs occupied by the beamformed CSI-RS include P groups of REs, the P groups of REs are respectively used to determine the uplink precoding information of the P RB sets, and at least two groups of REs in the P groups of REs occupy different quantities of REs.

It should be noted that for specific content such as an information execution process of the units of the communication apparatus 800, refer to descriptions in the foregoing method embodiments of this application. Details are not described herein again.

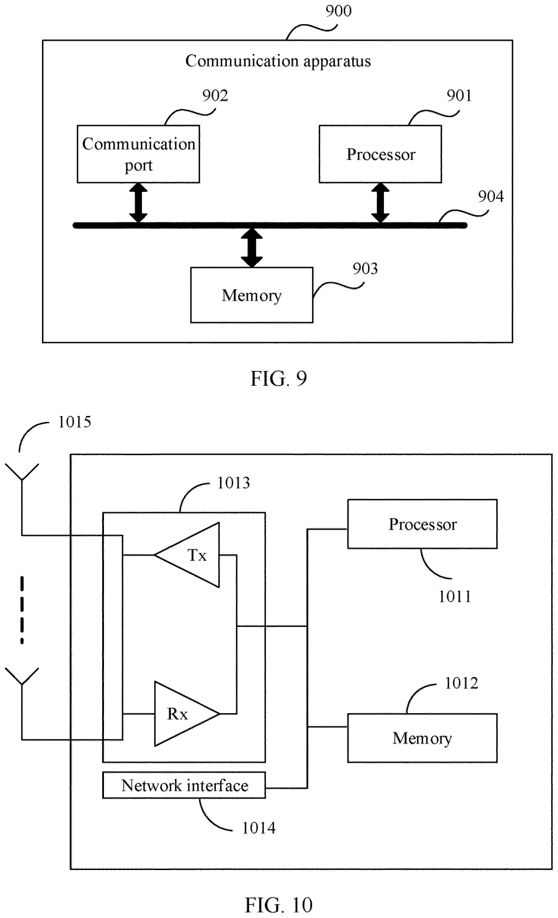

FIG. 9 is a diagram of a possible logical structure of a communication apparatus 900 related to the foregoing embodiments according to an embodiment of this application. The communication apparatus may be specifically the terminal device in the foregoing embodiments. The communication apparatus 900 may include, but not limited to, at least one processor 901 and a communication port 902. Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus shown in FIG. 9 may be specifically configured to implement other steps implemented by the terminal device in the foregoing corresponding method embodiments, and implement technical effects corresponding to the terminal device. For specific implementations of the communication apparatus shown in FIG. 9, refer to the descriptions in the foregoing method embodiments. Details are not described herein again.

FIG. 10 is a diagram of a structure of a communication apparatus in the foregoing embodiments according to an embodiment of this application. The communication apparatus may be specifically the network device in the foregoing embodiments. For a structure of the communication apparatus, refer to the structure shown in FIG. 10.

The communication apparatus includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a bus or by using another technology. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions of embodiments of this application, and execution of the program code is controlled by the processor 1011. Various types of executed computer program code may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal to the processor 1011, so that the processor 1011 further processes, for example, demodulates or decodes, the digital baseband signal or the digital intermediate frequency signal. In addition, the transmitter Tx of the transceiver 1013 is further configured to: receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion may be adjusted. The transmitter Tx may selectively perform one-level or multi-level up-conversion mixing and digital-to-analog conversion on the modulated digital baseband signal or digital intermediate frequency signal, to obtain the radio frequency signal. A sequence of the up-conversion mixing and the digital-to-analog conversion may be adjusted. The digital baseband signal and the digital intermediate frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmitting circuit, or the like.

It should be noted that the communication apparatus shown in FIG. 10 may be specifically configured to implement steps implemented by the network device in the foregoing method embodiments, and implement technical effects corresponding to the network device. For specific implementations of the communication apparatus shown in FIG. 10, refer to the descriptions in the foregoing method embodiments. Details are not described herein again.

An embodiment of this application further provides a computer-readable storage medium. The computer-readable storage medium is configured to store one or more computer-executable instructions. When the computer-executable instructions are executed by a processor, the processor performs the method in the possible implementations of the communication apparatus (which is implemented by using the terminal device) in the foregoing embodiments.

An embodiment of this application further provides a computer-readable storage medium. The computer-readable storage medium is configured to store one or more computer-executable instructions. When the computer-executable instructions are executed by a processor, the processor performs the method in the possible implementations of the communication apparatus (which is implemented by using the network device) in the foregoing embodiments.

An embodiment of this application further provides a computer program product (or referred to as a computer program). When the computer program product is executed by a processor, the processor performs the method in the possible implementations of the foregoing communication apparatus (which is implemented by using the terminal device).

An embodiment of this application further provides a computer program product (or referred to as a computer program). When the computer program product is executed by a processor, the processor performs the method in the possible implementations of the foregoing communication apparatus (which is implemented by using the network device).

An embodiment of this application further provides a chip system. The chip system includes at least one processor, configured to support a terminal device in implementing the functions in the possible implementations of the foregoing communication apparatus (which is implemented by using the terminal device). Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a chip system. The chip system includes at least one processor, configured to support a network device in implementing the functions in the possible implementations of the foregoing communication apparatus (which is implemented by using the network device). Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

An embodiment of this application further provides a communication system. The network system architecture includes the communication apparatus (which includes the terminal device and the network device) in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   receiving first indication information, wherein the first indication information indicates a quantity of bits occupied by second indication information, the second indication information indicates uplink precoding information of P resource block RB sets, each RB set in the P RB sets comprises one or more RBs, different RB sets in the P RB sets correspond to different uplink precoding information, and P is greater than or equal to 2;
   receiving downlink control information DCI;
   determining the second indication information in the DCI based on the quantity of bits; and
   sending uplink information based on the uplink precoding information of the P RB sets.

2. The method according to claim 1, wherein RBs comprised in the P RB sets are uplink resources scheduled for a terminal device.

3. The method according to claim 2, wherein the method further comprises:
   receiving third indication information, wherein the third indication information indicates that each RB set in the P RB sets comprises one or more RBs in the uplink resources scheduled for the terminal device.

4. The method according to claim 1, wherein RBs comprised in the P RB sets are frequency domain resources corresponding to an uplink bandwidth part BWP of a terminal device.

5. The method according to claim 4, wherein the method further comprises:
   receiving fourth indication information, wherein the fourth indication information indicates that each RB set in the P RB sets comprises one or more RBs in the frequency domain resources corresponding to the uplink BWP of the terminal device.

6. The method according to any one of claims 1 to 5, wherein the uplink precoding information of the P RB sets is determined based on a first codebook, and the first codebook is any one of the following:

   a preconfigured codebook;
   a codebook determined in at least two codebooks based on a value of P; or
   a codebook corresponding to a discrete Fourier transform DFT oversampling matrix generated based on a value of P.

7. The method according to any one of claims 1 to 5, wherein the uplink precoding information of the P RB sets is determined based on a first codebook; and
   the method further comprises:
   receiving fifth indication information, wherein the fifth indication information indicates that the first codebook is any one of the following:

   a preconfigured codebook;
   a codebook determined in at least two codebooks based on a value of P; or
   a codebook corresponding to a DFT oversampling matrix generated based on a value of P.

8. The method according to any one of claims 1 to 7, wherein

the second indication information comprises P pieces of information, the P pieces of information respectively indicate the uplink precoding information of the P RB sets, and different information in the P pieces of information occupies a same quantity of bits in the DCI; or

the second indication information comprises P pieces of information, the P pieces of information respectively indicate the uplink precoding information of the P RB sets, and at least two pieces of information in the P pieces of information occupy different quantities of bits in the DCI.

9. A communication method, comprising:

determining first indication information, wherein the first indication information indicates a quantity of bits occupied by second indication information, the second indication information indicates uplink precoding information of P RB sets, each resource block RB set in the P RB sets comprises one or more RBs, different RB sets in the P RB sets correspond to different uplink precoding information, and P is greater than or equal to 2;
sending the first indication information;
sending downlink control information DCI, wherein the DCI comprises the second indication information; and
receiving uplink information based on the uplink precoding information of the P RB sets.

10. The method according to claim 9, wherein RBs comprised in the P RB sets are uplink resources scheduled for a terminal device.

11. The method according to claim 10, wherein the method further comprises:
sending third indication information, wherein the third indication information indicates that each RB set in the P RB sets comprises one or more RBs in the uplink resources scheduled for the terminal device.

12. The method according to claim 9, wherein RBs comprised in the P RB sets are frequency domain resources corresponding to an uplink bandwidth part BWP of a terminal device.

13. The method according to claim 12, wherein the method further comprises:
sending fourth indication information, wherein the fourth indication information indicates that each RB set in the P RB sets comprises one or more RBs in the frequency domain resources corresponding to the uplink BWP of the terminal device.

14. The method according to any one of claims 9 to 13, wherein the uplink precoding information of the P RB sets is determined based on a first codebook; and
the method further comprises:
sending fifth indication information, wherein the fifth indication information indicates that the first codebook is any one of the following:

a preconfigured codebook;
a codebook determined in at least two codebooks based on a value of P; or
a codebook corresponding to a DFT oversampling matrix generated based on a value of P.

15. The method according to any one of claims 9 to 14, wherein

the second indication information comprises P pieces of information, the P pieces of information respectively indicate the uplink precoding information of the P RB sets, and different information in the P pieces of information occupies a same quantity of bits in the DCI; or

the second indication information comprises P pieces of information, the P pieces of information respectively indicate the uplink precoding information of the P RB sets, and at least two pieces of information in the P pieces of information occupy different quantities of bits in the DCI.

16. A communication apparatus, comprising a transceiver unit and a processing unit, wherein

the transceiver unit is configured to receive first indication information, wherein the first indication information indicates a quantity of bits occupied by second indication information, the second indication information indicates uplink precoding information of P RB sets, each resource block RB set in the P RB sets comprises one or more RBs, different RB sets in the P RB sets correspond to different uplink precoding information, and P is greater than or equal to 2;

the transceiver unit is further configured to receive downlink control information DCI;
the processing unit is configured to determine the second indication information in the DCI based on the quantity of bits; and
the transceiver unit is further configured to send uplink information based on the uplink precoding information of the P RB sets.

17. The apparatus according to claim 16, wherein RBs comprised in the P RB sets are uplink resources scheduled for a terminal device.

18. The apparatus according to claim 17, wherein
the transceiver unit is further configured to receive third indication information, wherein the third indication information indicates that each RB set in the P RB sets comprises one or more RBs in the uplink resources scheduled for the terminal device.

19. The apparatus according to claim 16, wherein RBs comprised in the P RB sets are frequency domain resources corresponding to an uplink bandwidth part BWP of a terminal device.

20. The apparatus according to claim 19, wherein
the transceiver unit is further configured to receive fourth indication information, wherein the fourth indication information indicates that each RB set in the P RB sets comprises one or more RBs in the frequency domain resources corresponding to the uplink BWP of the terminal device.

21. The apparatus according to any one of claims 16 to 20, wherein the uplink precoding information of the P RB sets is determined based on a first codebook, and the first codebook is any one of the following:

a preconfigured codebook;
a codebook determined in at least two codebooks based on a value of P; or
a codebook corresponding to a DFT oversampling matrix generated based on a value of P.

22. The apparatus according to any one of claims 16 to 20, wherein the uplink precoding information of the P RB sets is determined based on a first codebook; and
the transceiver unit is further configured to receive fifth indication information, wherein the fifth indication information indicates that the first codebook is any one of the following:

a preconfigured codebook;
a codebook determined in at least two codebooks based on a value of P; or
a codebook corresponding to a DFT oversampling matrix generated based on a value of P.

23. The apparatus according to any one of claims 16 to 22, wherein

the second indication information comprises P pieces of information, the P pieces of information respectively indicate the uplink precoding information of the P RB sets, and different information in the P pieces of information occupies a same quantity of bits in the DCI; or
the second indication information comprises P pieces of information, the P pieces of information respectively indicate the uplink precoding information of the P RB sets, and at least two pieces of information in the P pieces of information occupy different quantities of bits in the DCI.

24. A communication apparatus, comprising a transceiver unit and a processing unit, wherein

the processing unit is configured to determine first indication information, wherein the first indication information indicates a quantity of bits occupied by second indication information, the second indication information indicates uplink precoding information of P RB sets, each resource block RB set in the P RB sets comprises one or more RBs, different RB sets in the P RB sets correspond to different uplink precoding information, and P is greater than or equal to 2;
the transceiver unit is configured to send the first indication information;
the transceiver unit is further configured to send DCI, wherein the DCI comprises the second indication information; and
the transceiver unit is further configured to receive uplink information based on the uplink precoding information of the P RB sets.

25. The apparatus according to claim 24, wherein RBs comprised in the P RB sets are uplink resources scheduled for a terminal device.

26. The apparatus according to claim 25, wherein

the processing unit is further configured to determine third indication information, wherein the third indication information indicates that each RB set in the P RB sets comprises one or more RBs in the uplink resources scheduled for the terminal device; and
the transceiver unit is further configured to send the third indication information.

27. The apparatus according to claim 24, wherein RBs comprised in the P RB sets are frequency domain resources corresponding to an uplink bandwidth part BWP of a terminal device.

28. The apparatus according to claim 27, wherein

the processing unit is further configured to determine fourth indication information, wherein the fourth indication information indicates that each RB set in the P RB sets comprises one or more RBs in the frequency domain resources corresponding to the uplink BWP of the terminal device; and
the transceiver unit is further configured to send the fourth indication information.

29. The apparatus according to any one of claims 24 to 28, wherein the uplink precoding information of the P RB sets is determined based on a first codebook;
the processing unit is further configured to determine fifth indication information, wherein the fifth indication information indicates that the first codebook is any one of the following:

a preconfigured codebook;
a codebook determined in at least two codebooks based on a value of P; or
a codebook corresponding to a DFT oversampling matrix generated based on a value of P; and
the transceiver unit is further configured to send the fifth indication information.

30. The apparatus according to any one of claims 24 to 29, wherein

the second indication information comprises P pieces of information, the P pieces of information respectively indicate the uplink precoding information of the P RB sets, and different information in the P pieces of information occupies a same quantity of bits in the DCI; or
the second indication information comprises P pieces of information, the P pieces of information respectively indicate the uplink precoding information of the P RB sets, and at least two pieces of information in the P pieces of information occupy different quantities of bits in the DCI.

31. A communication apparatus, comprising at least one logic circuit and an input/output interface, wherein

the input/output interface is configured to input first indication information and downlink control information DCI;
the input/output interface is further configured to output uplink information; and
the logic circuit is configured to perform the method according to any one of claims 1 to 8.

32. A communication apparatus, comprising at least one logic circuit and an input/output interface, wherein

the input/output interface is configured to output first indication information and downlink control information DCI;
the input/output interface is further configured to input uplink information; and
the logic circuit is configured to perform the method according to any one of claims 9 to 15.

33. A communication system, wherein

the communication system comprises the communication apparatus according to any one of claims 16 to 23 and the communication apparatus according to any one of claims 24 to 30; or
the communication system comprises the communication apparatus according to claim 31 and the communication apparatus according to claim 32.

34. A computer-readable storage medium, wherein the medium stores instructions, and when the instructions are executed by a computer, the method according to any one of claims 1 to 15 is implemented.

35. A computer program product, comprising instructions, wherein when the instructions are run on a computer, the computer is enabled to perform the method according to any one of claims 1 to 15.

FIG. 1

FIG. 2a

**Base station** | | **UE**

① RRC signaling interaction

RRC — RRC

② MAC-CE signaling interaction

MAC — MAC

③ PDCCH, PDSCH

④ PUCCH, PUSCH

PHY — PHY

FIG. 2b

Uplink BWP

| RB 1 | RB 2 | RB 3 | RB 4 | RB 5 | RB 6 | RB 7 | RB 8 | RB 9 | RB 10 |

FIG. 3a

Uplink BWP

| RB 1 | RB 2 | RB 3 | RB 4 | RB 5 | RB 6 | RB 7 | RB 8 | RB 9 | RB 10 |

FIG. 3b

Uplink BWP

| RB 1 | RB 2 | RB 3 | RB 4 | RB 5 | RB 6 | RB 7 | RB 8 | RB 9 | RB 10 |

FIG. 3c

```
┌──────────┐                                    ┌──────────┐
│ Terminal │                                    │ Network  │
│  device  │                                    │  device  │
└──────────┘                                    └──────────┘
     │                                                │
     │        S401: First indication information      │
     │<───────────────────────────────────────────────│
     │                                                │
     │                  S402: DCI                     │
     │<───────────────────────────────────────────────│
     │                                                │
 ┌───────────────────────────────────────┐           │
 │ S403: Determine second indication      │           │
 │     information in the DCI             │           │
 └───────────────────────────────────────┘           │
     │                                                │
     │           S404: Uplink information             │
     │───────────────────────────────────────────────>│
     │                                                │
```

FIG. 4

```
┌──────────┐                                    ┌──────────┐
│ Terminal │                                    │ Network  │
│  device  │                                    │  device  │
└──────────┘                                    └──────────┘
     │                                                │
     │       S501: Sixth indication information       │
     │<───────────────────────────────────────────────│
     │                                                │
     │                S502: CSI-RS                    │
     │<───────────────────────────────────────────────│
     │                                                │
 ┌────────────────────────────────────────────┐      │
 │ S503: Perform channel measurement based     │      │
 │ on the CSI-RS to obtain uplink precoding    │      │
 │     information of P RB sets                │      │
 └────────────────────────────────────────────┘      │
     │                                                │
     │           S504: Uplink information             │
     │───────────────────────────────────────────────>│
     │                                                │
```

FIG. 5

Frequency
domain direction

Time domain
direction

FIG. 6a

Frequency
domain direction

Time domain
direction

FIG. 6b

700

Communication apparatus

701

Processing
unit

702

Transceiver
unit

FIG. 7

800

Communication apparatus

801

Processing
unit

802

Transceiver
unit

FIG. 8

900

Communication apparatus

902

Communication port

901

Processor

904

903

Memory

FIG. 9

1015

1013

Tx

Processor

1011

Rx

1012

Memory

Network interface

1014

FIG. 10

## INTERNATIONAL SEARCH REPORT

| International application No. |
|---|
| **PCT/CN2022/140220** |

### A. CLASSIFICATION OF SUBJECT MATTER

H04L1/00(2006.01)i

According to International Patent Classification (IPC) or to both national classification and IPC

### B. FIELDS SEARCHED

Minimum documentation searched (classification system followed by classification symbols)

IPC: H04L H04Q H04W

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, IEEE, 3GPP: 指示, 比特数, 资源块, 组, 上行预编码, 下行控制信息, 预编码矩阵指示, 不同, 集合, 盲检, 降低, 功耗, 能耗, 电量, indicator, indication, bit, RB, resource block, group, set, TPMI, PMI, DCI, different, blind detection, reduce, power

### C. DOCUMENTS CONSIDERED TO BE RELEVANT

| Category* | Citation of document, with indication, where appropriate, of the relevant passages | Relevant to claim No. |
|---|---|---|
| X | CN 111865490 A (HUAWEI TECHNOLOGIES CO., LTD.) 30 October 2020 (2020-10-30) description, paragraphs [0006]-[0098] and [0120]-[0147] | 1-35 |
| X | CN 109600838 A (HUAWEI TECHNOLOGIES CO., LTD.) 09 April 2019 (2019-04-09) description, paragraphs [0088]-[0124] | 1-35 |
| A | CN 112602269 A (HUAWEI TECHNOLOGIES CO., LTD.) 02 April 2021 (2021-04-02) entire document | 1-35 |
| A | CN 113824481 A (HUAWEI TECHNOLOGIES CO., LTD.) 21 December 2021 (2021-12-21) entire document | 1-35 |
| A | WO 2021163899 A1 (HUAWEI TECHNOLOGIES CO., LTD.) 26 August 2021 (2021-08-26) entire document | 1-35 |
| A | INTERDIGITAL INC. "TPMI Indication for Frequency Selective UL Precoding" *3GPP TSG RAN WG1 Meeting #90 R1-1714135*, 25 August 2017 (2017-08-25), entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 February 2023** | **22 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/140220**

| Patent document cited in search report | | | Publication date (day/month/year) | Patent family member(s) | | | Publication date (day/month/year) |
|---|---|---|---|---|---|---|---|
| CN | 111865490 | A | 30 October 2020 | WO | 2018202068 | A1 | 08 November 2018 |
| | | | | CN | 108809492 | A | 13 November 2018 |
| | | | | US | 2020067586 | A1 | 27 February 2020 |
| | | | | EP | 3618323 | A1 | 04 March 2020 |
| CN | 109600838 | A | 09 April 2019 | WO | 2019062560 | A1 | 04 April 2019 |
| CN | 112602269 | A | 02 April 2021 | WO | 2020087536 | A1 | 07 May 2020 |
| CN | 113824481 | A | 21 December 2021 | WO | 2021254506 | A1 | 23 December 2021 |
| WO | 2021163899 | A1 | 26 August 2021 | EP | 4096111 | A1 | 30 November 2022 |
| | | | | CN | 115152158 | A | 04 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111669034